(19) **Europäisches Patentamt / European Patent Office / Office européen des brevets**

(11) **EP 1 304 544 B1**

(12) **EUROPEAN PATENT SPECIFICATION**

(45) Date of publication and mention
of the grant of the patent:
**17.12.2008 Bulletin 2008/51**

(51) Int Cl.:
***G01C 19/56*** (2006.01)    ***G01C 9/06*** (2006.01)
***B62K 11/00*** (2006.01)    ***B60K 28/10*** (2006.01)

(21) Application number: **02023603.0**

(22) Date of filing: **17.10.2002**

(54) **Two-wheeled vehicle**

Zweirad

Véhicule à deux roues

(84) Designated Contracting States:
**DE ES FR GB IT**

(30) Priority: **19.10.2001 JP 2001321497**
            **29.10.2001 JP 2001330158**
            **12.07.2002 JP 2002204267**
            **19.09.2002 JP 2002273003**

(43) Date of publication of application:
**23.04.2003 Bulletin 2003/17**

(73) Proprietor: **Yamaha Hatsudoki Kabushiki Kaisha
Iwata-shi, Shizuoka-ken (JP)**

(72) Inventors:
• **Hasegawa, Takahiko
Iwata-shi,
Shizuoka-ken (JP)**

• **Kataoka, Masashi
Iwata-shi,
Shizuoka-ken (JP)**

(74) Representative: **Grünecker, Kinkeldey,
Stockmair & Schwanhäusser
Anwaltssozietät
Leopoldstrasse 4
80802 München (DE)**

(56) References cited:
**WO-A-01/28820**      **DE-A1- 19 526 903**
**FR-A- 2 583 704**      **US-A- 5 445 443**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a two-wheeled vehicle and particularly refers to a turnover detecting apparatus of a motor cycle using an acceleration sensor.

In a motor cycle, it is known to provide an ECU (Engine Control Unit) for fuel injection control and ignition timing control. The ECU controls to drive an injector or an ignition coil in accordance with previously set maps or control programs based on engine rotational number detecting data or throttle opening degree detecting data or suction pipe negative pressure detecting data or the like. Such an ECU is mounted with semiconductor elements of a storage circuit stored with maps and programs, an operation circuit for processing data and the like on a printed board and is attached to a vehicle body in a unitized state as a single part.

Further, it is known to provide a turnover sensor in the motor cycle, wherein fuel injection and ignition are stopped when turnover of a vehicle body is detected and an electromagnetic pump for supplying fuel is stopped to thereby prevent the fuel from flowing out when the engine is stopped.

A conventional turnover sensor is of a mechanical structure in which a weight or a pendulum moved in accordance with inclination of the vehicle body is used and the weight or the pendulum makes a switch ON in the case of turnover. The turnover sensor of the mechanical structure is attached to the vehicle body separately from ECU for transmitting turnover detecting data to ECU and based on the detecting data, ECU controls the engine in the case of turnover.

However, according to the conventional mechanical turnover sensor, there is an insufficient aspect in view of detection accuracy and reliability. Therefore, in order to promote accuracy and reliability by improving the sensor, it is necessary to prevent contact failure of the switch and achieve smooth operation of the weight or the pendulum. For such purpose, it is necessary to carry out a plating treatment or constitute a stepless structure and the fabricating process becomes troublesome to thereby give rise to a factor of increasing cost. Further, also a size or a weight thereof is large to constitute a spatial restriction against other parts.

Further, according to the conventional structure of attaching the ECU, i.e. the ECU and the turnover sensor are separate from each other and therefore, when used in a small-sized scooter or the like having a narrow space around an engine, a restriction in view of space is considerable. Further, the conventional turnover sensor of the vehicle body uses a mechanical type pendulum structure and therefore, the turnover sensor is large-sized and a constitution thereof becomes complicated, further, the turnover sensor is obliged to install vertically to the ground and vertically to the front and rear direction of the vehicle body such that the pendulum can be moved smoothly in the left and right direction of the vehicle body, the layout becomes complicated and attachment thereof is troublesome.

Meanwhile, an acceleration sensor constituted by a semiconductor element is known. According to the acceleration sensor, a capacitor is formed between electrodes and a capacitance thereof is changed in accordance with acceleration to thereby detect a magnitude of the acceleration. Such an acceleration sensor is not provided with a large mechanical constitution other than the electrodes and highly accurate acceleration detecting data can be obtained in the mode of the semiconductor element. Therefore, when the gravitational acceleration is detected by the acceleration sensor, an inclination of the sensor can be detected.

Hence, within the older, however not prepublished Japanese Patent Laid-Open No. 71703/2002, it has been proposed to use the acceleration sensor as a turnover sensor and integrate the acceleration sensor integrally to inside of ECU.

The acceleration sensor is provided with a detecting direction for detecting acceleration, a uniaxial sensor detects acceleration with respect to one direction, a biaxial sensor respectively detects accelerations with respect to two directions orthogonal to each other and a triaxial sensor respectively detects accelerations with respect to three directions orthogonal to each other. When the acceleration sensor is integrated Into ECU as a turnover sensor and the ECU is attached to a vehicle body, it seems that acceleration In the case of inclining the vehicle body can efficiently be detected by constituting a detecting direction of the acceleration sensor with regard to one axis by either of vertical arrangement constituting an up and down direction (direction orthogonal to the ground) relative to the vehicle body or horizontal arrangement constituting a left and right direction (vehicle width direction) relative to the vehicle body.

Such an acceleration sensor outputs analog voltage as detecting voltage in accordance with the inclination of the vehicle body. The analog detecting voltage is subjected to A/D conversion and inputted to a control circuit (CPU) in ECU as a digital signal to thereby determine a turnover state.

However, In the case of using the acceleration sensor as the turnover sensor and determining turnover from the detecting signal, when turnover is determined by subjecting the detecting signal to A/D conversion, there arises conversion error based on an A/D conversion width. Therefore, there is a concern of making erroneous determination by occurrence of an error of detecting a turnover angle due to the conversion error. The invention takes the above-described conventional technology into account.

US 5445443 is related to an anti-lock brake system for motorcycles using two acceleration sensors and a pressure modulator, which adjusts the brake pressure based on the sensor information. A first sensor measures the horizontal acceleration of the vehicle and a second sensor measures the vertical acceleration of the vehicle. Based on the sensor information, a tilt angle is calculated in order to perform a curve recognition and in order to adapt the operation of the anti-lock braking control to such driving conditions.

It is an objective of the present invention to provide a two-wheeled vehicle whose inclination angle can be determined with reduced error so as to promote an accuracy in determining turnover.

According to the present invention, the said objective is solved in an inventive manner by the combination of features of independent claim 1.

With the invented two-wheeled vehicle, there is beneficially provided a turnover detecting apparatus of a motor cycle which is easy to be attached, capable of realizing a small-sized formation, and capable of being laid out efficiently in a narrow space without restricting arrangement of other parts by simplifying constitutions and layout of parts around an engine.

According to a preferred embodiment, the acceleration sensor is further adapted to detect an acceleration in a second detecting direction in a direction orthogonal to the first detecting direction.

It is further beneficial if the acceleration sensor is integrated at an inside of the engine control unit.

Preferably, the turnover detecting means is adapted to detect an acceleration in the first acceleration detecting direction based on a difference from a previously set reference value in the uninclined state and/or is adapted to detect an acceleration in the second acceleration detecting direction based on a change amount of the acceleration.

Further preferably, the turnover detecting means is adapted to change a threshold value for determining turnover in the first detecting direction based on an angle of attaching the acceleration sensor.

Still further preferably, the turnover detecting means is adapted to maintain a detected value of the acceleration sensor as data of a central value and to determine the turnover with the central value as the reference value, in case a running speed is equal to or larger than a constant value and the amount of changing a detecting output of the acceleration sensor is equal to or smaller than a constant value.

According to another preferred embodiment, the acceleration sensor is constituted by a vertically arranged uniaxial acceleration sensor or a biaxial or triaxial acceleration sensor having a vertically arranged first detecting direction.

According to yet another preferred embodiment, the turnover detecting means comprises a two-dimensional acceleration sensor, wherein the turnover detecting means is contained at the inside of the engine control unit and the engine control unit is attached to a vehicle body frame such that a detecting face of the turnover sensor becomes substantially vertical to a front and rear direction of the vehicle body.

According to a further preferred embodiment, the turnover detecting means comprises a sensor in a vertical direction and a sensor in a horizontal direction or a biaxial or a triaxial sensor having horizontally and vertically arranged detecting directions, wherein turnover is determined based on a relation between an output in the horizontal direction and an output in the vertical direction.

According to still another preferred embodiment, the engine control unit is provided at a central portion in a left and right direction of the vehicle body.

It is also beneficial if brackets for attaching a fuel tank are fixed to vehicle body frame members arranged on a left side and on a right side of the central portion of the vehicle body, the engine control unit is arranged between the left and the right brackets and the engine control unit is fixed to the respective brackets via stays.

It is further beneficial if the engine control unit is adapted to gradually reduce an engine output in case a turnover is detected by means of the turnover detecting means.

In the following, the present invention is explained in greater detail with respect to several embodiments thereof in conjunction with the accompanying drawings, wherein:

Fig. 1     is an explanatory view of an output voltage of an acceleration sensor in horizontal arrangement,

Fig. 2     is an explanatory view of the output voltage of the acceleration sensor in vertical arrangement,

Fig. 3     is a flowchart of a control of determining turnover by a uniaxial acceleration sensor,

Fig. 4     is a flowchart of a control of determining turnover by a biaxial acceleration sensor,

Fig. 5     is a block diagram of an embodiment of a turnover sensor having a biaxial or triaxial acceleration sensor,

Fig. 6     is a flowchart of operation of the embodiment of Fig. 5,

Fig. 7     is an explanatory view of output voltage of another embodiment of the present turnover sensor,

Fig. 8     illustrates explanatory views of a constitution of still another embodiment of the present turnover sensor,

Fig. 9     is a flowchart of operation of yet another embodiment,

Fig. 10    is a flowchart of operation of still another embodiment,

Fig. 11   is a flowchart of operation of still other embodiment,

Fig. 12   is a graph of a sensor output of the embodiment of Fig. 11,

Fig. 13   is an outlook view of a small-sized motor cycle,

Fig. 14   is a side view of an essential portion of the motor cycle of Fig. 13,

Fig. 15   is a plane view of the essential portion of the motor cycle of Fig. 13,

Fig. 16   is a constitution view of an engine portion of the motor cycle of Fig. 13,

Fig. 17   illustrates explanatory views of a constitution of a structure of attaching an electronic control unit (ECU), and

Fig. 18   illustrates explanatory views of a further constitution of a structure of attaching ECU.

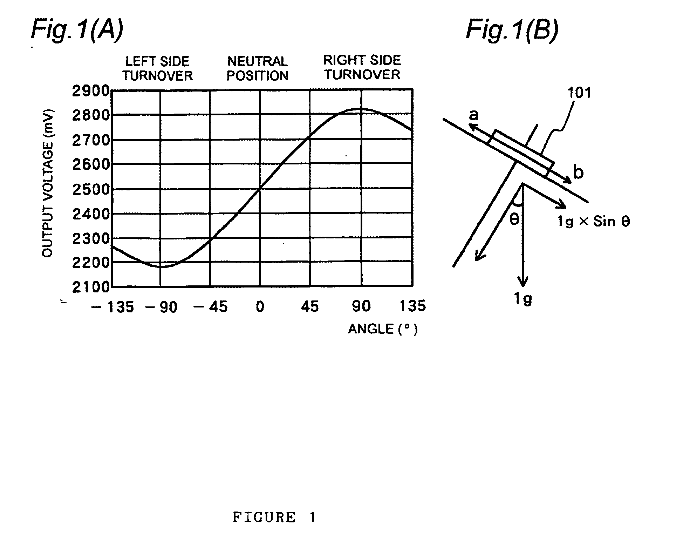

Fig. 1 illustrates explanatory views of a sensor output when a uniaxial acceleration sensor is arranged horizontally. Fig. 1(A) is an explanatory view of an output waveform and Fig. 1(B) is an explanatory view of a state of inclining a vehicle body by an angle θ to the right.

An acceleration sensor 101 is attached to a vehicle body in horizontal arrangement in which a detecting direction ab thereof is arranged horizontally in a straight uninclined state (neutral position) of the vehicle body. Therefore, the sensor output becomes output voltage V=g·sinθ with respect to an inclination angle θ of the vehicle body and an output voltage characteristic draws a sine curve as shown in Fig. 1(A). A motor cycle is regarded to be in a turnover state when the vehicle body is inclined to exceed a bank angle (about 65 through 70°) and with 70° as a criterion, turnover can be determined when the criterion is exceeded. Therefore, the sensor output in the case of 70° constituting the criterion becomes as follows when a determining output is designated by notation Vc.

$$Vc=g·sin70°=0.94g$$

In this case, an error of the angle in the case of constituting an A/D conversion error as ±10mV (±0.03g) becomes as shown below.

$$(0.94-0.03)g \cong g·sin65°$$

$$(0.94+0.03)g \cong g·sin75°$$

Therefore, an error of angle based on A/D conversion becomes 70±5°.

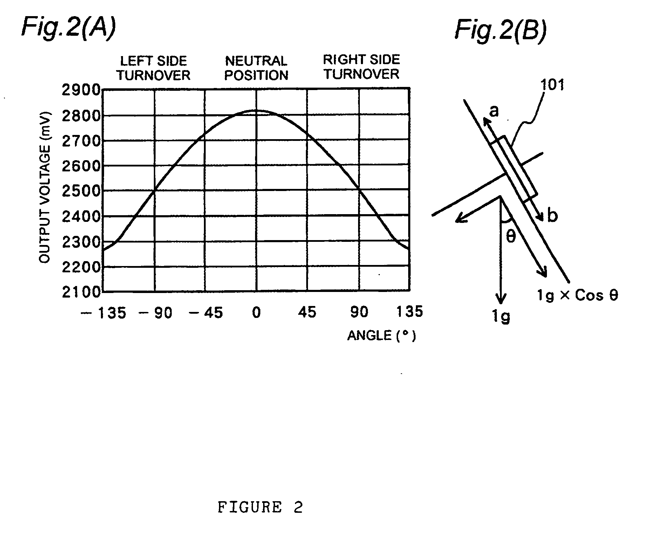

Fig. 2 illustrates explanatory views of a sensor output when a uniaxial acceleration sensor is arranged vertically. Fig. 2(A) is an explanatory view of an output waveform and Fig. 2(B) is an explanatory view of a state of inclining a vehicle body by an angle θ to the left.

The acceleration sensor 101 is attached to the vehicle body in vertical arrangement in which the detecting direction ab is arranged to be vertical to the ground in a straight uninclined state (neutral position) of the vehicle body. Therefore, the sensor output becomes output voltage V=g·cosθ with respect to the inclination angle θ of the vehicle body and the output voltage characteristic draws a cosine curve as shown in Fig. 2(A). The motor cycle is regarded to be in the turnover state when the vehicle body is inclined to exceed the bank angle (about 65 through 70°) and with 70° as the criterion, turnover can be determined when the criterion is exceeded. Therefore, the sensor output in the case of 70° constituting the criterion becomes as follows when the determining output is designated by notation Vc.

$$Vc=g·cos70°=0.34g$$

In this case, an error of angle in the case of constituting the A/D conversion error by ±10mV (±0.03g) is as shown below.

$$(0.34-0.03)g \cong g·cos72°$$

$$(0.34+0.03)g \cong g·cos68°$$

Therefore, the angle error based on A/D conversion becomes 70±2°.

That is, in the inclination angle at a vicinity of 70° constituting the criterion of determining turnover, the angle error based on A/D conversion in the case of vertical arrangement shown in Fig. 2 is smaller than that in the case of horizontal arrangement shown in Fig. 1. Therefore, according to an embodiment, in the case of using a uniaxial acceleration sensor, by vertically arranging (Z direction) the sensor, the A/D conversion error can be reduced and the detection accuracy can be increased. In the case of using a biaxial (Y, Z direction) or a triaxial (X, Y, Z direction) acceleration sensor, one detecting direction (first detecting direction) is necessarily arranged vertically (Z direction) and a second detecting direction is constituted by a horizontal vehicle width direction (Y direction) or a front and rear direction (X direction).

When a biaxial or triaxial acceleration sensor is used, in the case in which when an inclination equal to or larger than a turnover angle is detected by the sensor in Z direction, the sensor in X direction or Y direction does not detect the inclination, running is regarded as willing running or steep slope running, a processing in turnover (stop a fuel pump, stop fuel injection, stop ignition or the like) is not carried out and running is continued in the state of normal control.

When the detecting directions of a biaxial acceleration sensor are determined as Z and X directions and the detection output in X direction is changed (when inclination in the front and rear direction is detected), it is also possible to determine that running is steep slope running or willing running and not to regard the change as turnover.

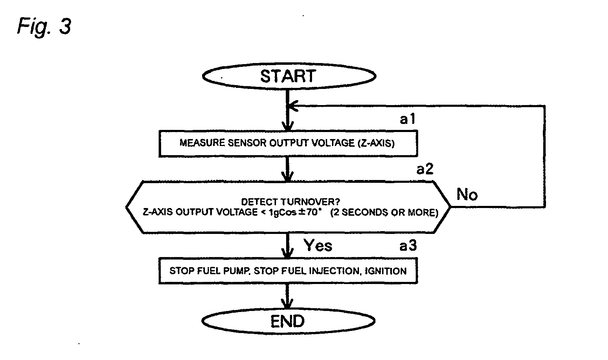

Fig. 3 is a flowchart of a control example of a turnover detecting apparatus according to an embodiment.

According to the embodiment, turnover is determined only by detection by a uniaxial (Z axis direction) sensor.

Step a1: Output voltage is detected from a turnover sensor vertically arranging a uniaxial acceleration sensor, or a sensor in Z-axis direction which is a first detecting direction of vertical arrangement of a biaxial or triaxial acceleration sensor.

Step a2: Turnover or not is determined by detecting output voltage of a Z-axis direction sensor. That is, it is determined whether there is constituted a state in which the detecting output voltage is smaller than an output voltage value (g·cos($\pm 70°$)) in correspondence with $\pm 70°$ constituting a turnover determining reference angle in the above-described cosine curve of Fig. 2(A). When the state continues for 2 seconds or more, turnover is determined. Further, the required condition is constituted by continuation of the state of 2 seconds or more to promote reliability in determining turnover by detecting the voltage.

Step a3: When turnover is determined, a fuel pump is stopped and fuel injection and ignition are stopped to thereby stop the engine. At this occasion, it is preferable to gradually reduce an engine output. For example, application of a drive pulse signal to an ignition coil in an ignition cycle by normal control, is stopped at a pertinent interval to thereby control ignition by thinning control and the number of times of ignition by normal control is reduced to thereby reduce the output. At this occasion, according to a thinning interval of stopping ignition, ignition is cut firstly at a long interval and ignition is thinned to gradually shorten the interval. Therefore, the vehicle body is prevented from being unstable by rapidly reducing the output in the case of erroneous operation or the like. In place of such an ignition control, or along therewith, thinning of fuel injection may similarly be carried out. In this case, application of a drive pulse signal to a solenoid of an injector is gradually reduced to thereby reduce the output. In the case of a vehicle having an electronic throttle, the output may be reduced by controlling the electronic throttle.

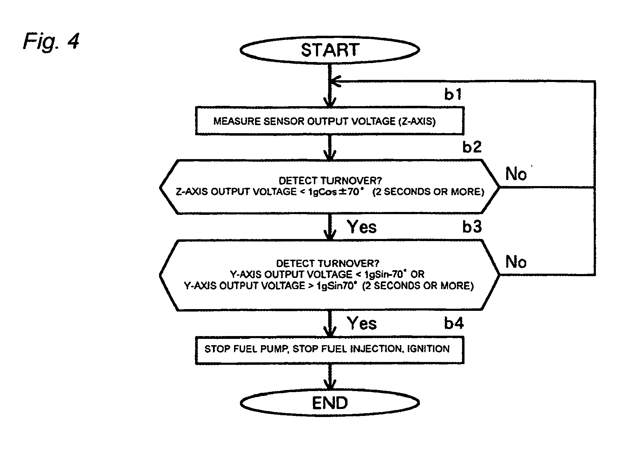

Fig. 4 is flowchart of other control example of a turnover control apparatus according to a further embodiment.

According to the embodiment, by using an output from a biaxial (Y-axis direction and Z-axis direction) detecting sensor, in addition to turnover determination based only on the Z-axis sensor according to the above-described embodiment of Fig. 3, a turnover determining condition based on a Y-axis sensor is added. Thereby, inclination of the vehicle body by willing running or steep slope running can be determined to differentiate from turnover.

Step b1: A biaxial acceleration sensor is vertically arranged and detecting directions are constituted by Z-axis (up and down direction) and Y-axis (left and right direction). Output voltage of the acceleration sensor is detected with respect to Z-axis and Y-axis directions.

Step b2: Turnover or not is determined by detecting output voltage of the Z-axis direction sensor. That is, it is determined whether there is constituted the state in which the detecting output voltage is smaller than the output voltage value (g·cos($\pm 70°$)) in correspondence with $\pm 70°$ constituting the turnover determining reference angle in the above-described cosine curve of Fig. 2(A). Turnover is determined when the state continues for 2 seconds or more. Further, as described above, the required condition is constituted by continuation of the state for 2 seconds or more to promote reliability in determining turnover by detecting the voltage.

Step b3: In the case of determining turnover by the sensor in the Z-axis direction at the above-described step b2, turnover or not is determined further by detecting output voltage of the Y-axis direction sensor. That is, it is determined whether there is constituted a state in which the output voltage is larger than the output voltage value (g·sin(70°)) or a state in which the detecting output voltage is smaller than g·sin(-70°)) in correspondence with $\pm 70°$ constituting turnover determining reference angles in the above-described sine curve of Fig. 1(A). Turnover is determined when the state continues for 2 seconds or more.

In the case in which the Y-axis sensor detects that the vehicle body is not inclined in the left and right direction even when turnover is determined at the above-described step b2, this is the state in which the vehicle body is inclined in the front and rear direction by willing running or the like and routine of normal control is repeated.

Step b4: When turnover is determined, the fuel pump is stopped and fuel injection and ignition are stopped to thereby stop the engine. At this occasion, as described above, it is preferable to gradually reduce the engine output.

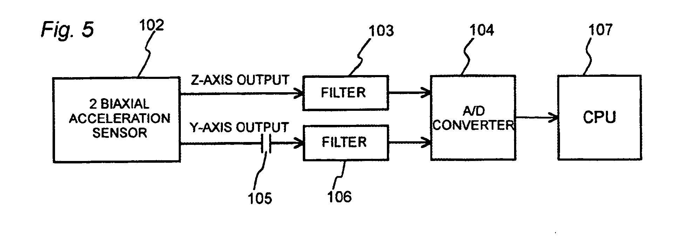

Fig. 5 is a block diagram of another embodiment.

According to the embodiment, when a biaxial or triaxial acceleration sensor is used, input to CPU for determining turnover is divided into two routes of DC input and AC input.

As illustrated, Z-axis output from a Z-axis sensor of a biaxial acceleration sensor 2 is inputted to an A/D converter 4 via a noise removing filter 3, subjected to A/D conversion in the A/D converter 4 and inputted to CPU 7 in ECU to determine the turnover state by operation processing. The route is DC input route.

Meanwhile, Y-axis output from a Y-axis sensor of the biaxial acceleration sensor 2 is inputted to the A/D converter 4 via a smoothing capacitor 5 and a filter 6, subjected to A/D conversion at the A/D converter 4 and inputted to CPU 7 in ECU to determine the turnover state by operation processing. The route is an AC input route.

The Y-axis sensor is an auxiliary sensor for preventing erroneous operation by determining willing running or the like as mentioned above. Therefore, it is sufficient when the Y-axis sensor determines whether the vehicle body is inclined from a straight state in running. Hence, the input from the Y-axis sensor to CPU determines willing running or the like by an amount of changing the output voltage as the AC input. Thereby, it is not necessary to compare the output voltage with the first reference value and calculate a difference therebetween and therefore, a correction of an offset error in the reference value is dispensed with.

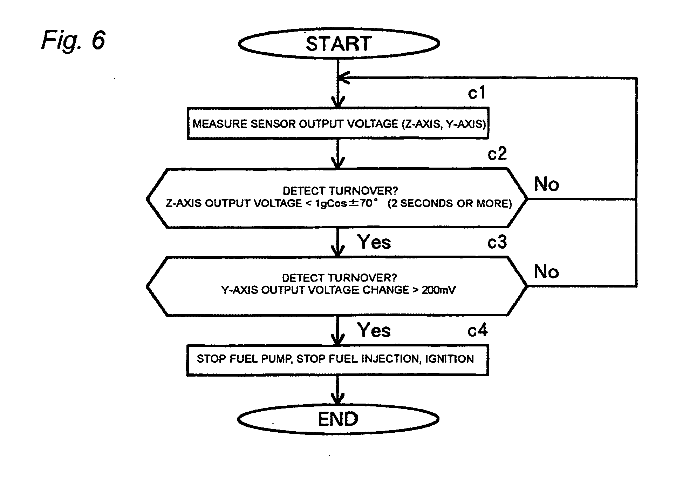

Fig. 6 is a flowchart showing operation of the above-described turnover detecting apparatus of Fig. 5.

Step c1: The biaxial acceleration sensor is arranged vertically and detecting directions are constituted by Z-axis (up and down direction) and Y-axis (left and right direction). Output voltage of the acceleration sensor is detected with respect to Z-axis and Y-axis directions.

Step c2: Turnover or not is determined by detecting output voltage of the Z-axis direction sensor. That is, it is determined whether there is constituted a state in which the detecting output voltage is smaller than the output voltage value ($g \cdot cos(\pm 70°)$) in correspondence with $\pm 70°$ constituting the turnover determining reference angles. When the state continues for 2 seconds or more, turnover is determined. Further, as described above, the required condition is constituted by continuation of the state for 2 seconds or more to promote reliability in determining turnover by detecting the voltage.

Step c3: When turnover is determined by the sensor in the Z-axis direction at the above-described step c2, turnover or not is determined further by detecting output voltage of the Y-axis direction sensor. In this case, it is determined whether the output voltage of the horizontal Y-axis sensor is changed by a predetermined value (for example, 200mV) in the above-described sine curve of Fig. 1(A) and a difference from the neutral position is not calculated. When there is not a change in inclination in the horizontal direction (vehicle left and right direction) (when the output voltage is equal to or smaller than 200mV), detection of turnover at the above-described step c2 is constituted by inclination of the vehicle body in the front and rear direction by willing running or the like, a turnover processing is not carried out and routine of normal control is repeated.

Step c4: In the case of determining turnover, the fuel pump is stopped and fuel injection and ignition are stopped to thereby stop the engine. At this occasion, as described above, it is preferable to gradually reduce the engine output.

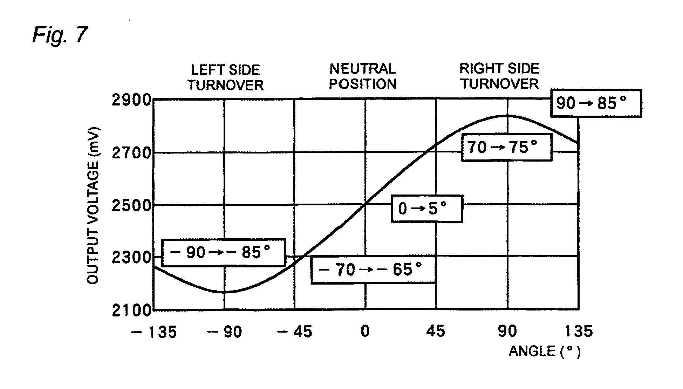

Fig. 7 is an explanatory diagram of still other embodiment.

According to the embodiment, a reduction in detection accuracy by an error in attaching the acceleration sensor is prevented by changing a threshold of detecting voltage of an accelerator sensor.

According thereto, an angle of the error in attaching the acceleration sensor is measured and the threshold is changed by an amount of the angle based thereon. In measuring the attaching error angle, in the case of the horizontal sensor, sensor output is measured at three points of -90°, 0°, +90° and the attaching error angle is calculated by an operation processing from a result of the measurement. In the case of a vertical sensor, the sensor output is measured at three points of 0°, 90°, 180° and the attaching error angle is calculated by an operational processing from a result of the measurement.

When an explanation is given to the operational processing by taking an example of horizontal arrangement,

when -90°: $Y = a + X\sin(-90+b) = a - X\cos(b)$

when 0°: $Y' = a + X\sin(b)$

when +90°: $Y'' = a + X\sin(90+b) = a + X\cos(b)$

where notations Y, Y', Y'' designate output voltages, notation a designates offset voltage, notation X designates a sensitivity and notation b designates a sensor inclination (attaching error angle).

Here, $a = (Y - Y'')/2$ from $Y + Y'' = 2a$

$X = (Y'' - Y)/2\cos(b)$ from $Y'' - Y = 2X\cos(b)$

$2\cos(b) * \sin(b) = \sin(2b) = (Y'' - Y)/(Y' - a)$

$Y' - a = X\sin(b) = (Y'' - Y)/\{2\cos(b) * \sin(b)\}$

Therefore, $b = 1/2 * \sin^{-1}\{(Y'' - Y)/(Y' - a)\}$.

The threshold of determining turnover is changed based on the inclination angle b calculated in this way.

According to the example of Fig. 7, in the horizontal sensor, when b is inclined by +5°, the threshold values are changed from $\pm 70°$ to -65° and +75°. In the case of the vertical sensor (case of the vertical sensor (Z-axis sensor) of the biaxial acceleration sensor), the threshold can be changed in accordance with the left and right direction by determining the left and right inclination direction from the Y-axis sensor.

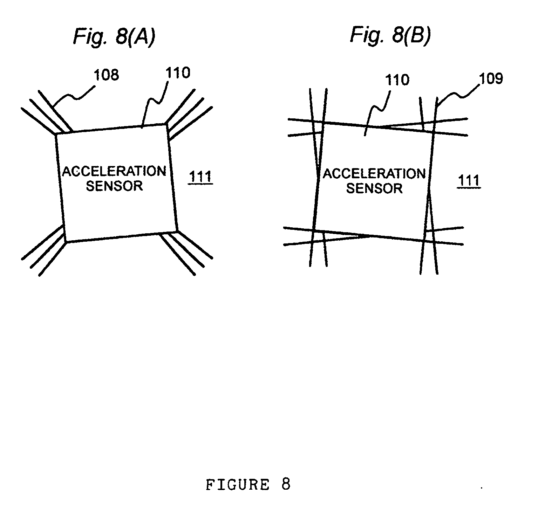

Fig. 8 illustrates explanatory views of still other embodiment.

According to the embodiment, in checking a position of attaching an acceleration sensor 110 on a printed board 111, a marking 108, 109 by silk is provided previously at a position for mounting the sensor on the printed board 111 and optical or automatic checking can be facilitated. The marking 108, 109 is formed at a position constituting a measure of an allowable range of inclination or an angle of attaching the acceleration sensor 110. The shape of the making is not limited to those in Figs. 8(A) and 8(B) but may be any shapes so far as an angle thereof can substantially be identified.

By marking in this way, the error of attaching the acceleration sensor relative to the printed board can be identified, the determination of turnover can be corrected based thereon and a failed product can easily be determined.

The printed board constituting CPU by mounting the acceleration sensor in this way is contained in a case of ECU. In this case, it is preferable to provide a guide in the ECU case, insert and position the printed board in the case by sliding the printed board along the guide and fixedly hold the printed board at a predetermined position in the case positioned in this way by filling resin or the like. Thereby, the detection error by the error of attaching the printed board to ECU is reduced.

In the case of mounting ECU including the turnover sensor to the vehicle body, when ECU is remote from the gravitational center of the vehicle body, vibration of the vehicle body influences on the turnover sensor to thereby reduce the detection accuracy and cause erroneous determination.

Therefore, in order to promote the detection accuracy, it is preferable to attach ECU as near to the gravitational center of the vehicle body as possible. Thereby, noise factor caused by influence of vibration or pitching in the front and rear direction of the vehicle body can be reduced to thereby promote the detection accuracy.

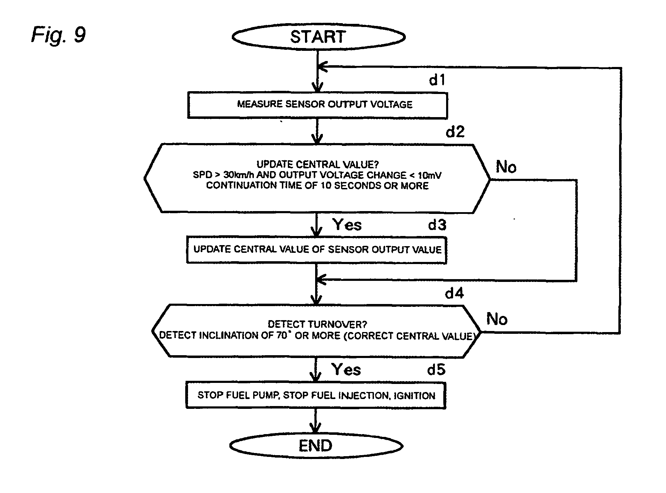

Fig. 9 is a flowchart of still other embodiment.

According to the embodiment, the detection accuracy is promoted by dealing with a problem in which the detection accuracy is deteriorated by a dispersion in offset, aging change, temperature characteristic or the like of a turnover sensor, which has been problematic conventionally and correcting the turnover sensor by using a speed sensor.

Step d1: Vehicle speed is detected by a speed sensor and inclination of the vehicle body is detected by a turnover sensor (acceleration sensor).

Step d2: It is determined whether a state in which a detecting value of the speed sensor exceeds a predetermined value (30km/h according to the example) and an output voltage change of a turnover sensor is less than a predetermined value (10mV according to the example), continues for 10 seconds or more. When the state continues for 10 seconds or more, it is determined that the vehicle body is running in a straight attitude.

Step d3: When it is determined in the above-described step d3 that the vehicle body is running in the straight attitude, an output of the turnover sensor or an average value thereof is updated and held as a central value (output voltage value at the neutral position of Fig. 1 and Fig. 2).

Step d4: It is determined whether turnover (inclination is 70° or more) or not is determined by detecting a change from the central value. Thereby, turnover can highly accurately be detected regardless of the temperature characteristic or the dispersion in the offset by the attaching error or the aging change or the like of the sensor.

Step d5: When turnover is determined, the fuel pump is stopped and fuel injection and ignition are stopped to thereby stop the engine. At this occasion, as described above, it is preferable to gradually reduce the engine output.

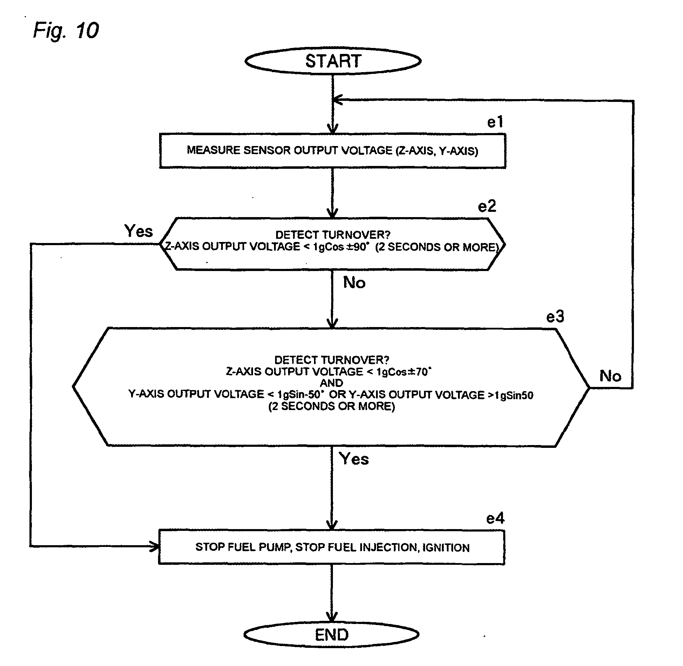

Fig. 10 is a flowchart of still other embodiment.

According to the embodiment, reliability in determining inclination of the vehicle body other than turnover in willing running or the like in the above-described embodiment of Fig. 4, is further promoted. That is, according to the embodiment of Fig. 4, when the vehicle body is brought into a state of being upside down or turned down by 90° or more, there is a case in which turnover is not determined. According to the embodiment, turnover in the upside-down state is surely determined.

Stating further in details, when the vehicle body is turned over by 180°, the output of the horizontal Z-axis sensor becomes 1gCos(180°)=-1g as shown in Fig. 2, mentioned above, showing the turnover state. Meanwhile, the output of the horizontal Y-axis sensor becomes 1gSin(180°)=0g as shown in Fig. 1, mentioned above, erroneously determining a state of not being turned over.

The embodiment prevents such an erroneous determination and determines turnover regardless of the Y-axis sensor when inclination of $\pm90°$ or more is detected by the Z-axis sensor.

Step e1: A biaxial acceleration sensor is vertically arranged and detecting directions are constituted by Z-axis (up and down direction) and Y-axis (left and right direction). Output voltage of the acceleration sensor is detected with regard to Z-axis and Y-axis directions.

Step e2: Upside-down turnover (turnover of $\pm90°$ or more) or not is determined by detecting output voltage of the Z-axis direction sensor. That is, in the above-described cosine curve of Fig. 2(a), the turn determining angle is set to $\pm90°$ and it is determined whether there is a state in which the detecting output voltage is smaller than an output voltage value ($g\cdot\cos(\pm90°)$) in correspondence therewith. When the state continues for 2 seconds or more, the upside-down turnover is determined. Further, the required condition is constituted by continuation of the state for 2 seconds or more to promote reliability in determining turnover by detecting the voltage.

When the upside-down turnover is determined at this occasion, the operation immediately proceeds to step e4 and carries out turnover control of stopping the fuel pump or the like.

Step e3: When it is determined that the turnover is not the upside-down turnover (not inclined by $\pm90°$ or more) by the sensor in the Z-axis direction at the above-described step e2, the turnover (turnover within $\pm 90°$) or not is determined by detecting output voltages of the Z-axis sensor and the Y-axis sensor.

That is, first, the turnover or not is determined by the detecting output voltage of the Z-axis direction sensor. According thereto, as described above, it is determined whether there is constituted a state in which the detecting output voltage is smaller than the output voltage value ($g \cdot \cos(\pm 70°)$) in correspondence with $\pm 70°$ constituting the turnover determining reference angles in the cosine curve of Fig. 2(A). When the state continues for 2 seconds or more, turnover is determined. Further, as described above, the required condition is constituted by continuation of the state for 2 seconds or more to promote reliability in determining turnover by detecting the voltage.

Further, in order to confirm that the determination of turnover by the Z-axis sensor does not correspond to willing or steep slope running, it is determined whether the Y-axis sensor is inclined and turnover is determined only when the Y-axis sensor is determined to be inclined. In this case, the turnover determining reference angle is set to $\pm 50°$. Thereby, the detection accuracy of the horizontal Y-axis sensor is promoted more than that when the determining angle is set to $\pm 70°$ as is known from the above-described graph of Fig. 1.

That is, in determining turnover in Y-axis, in the above-described sine curve of Fig. 1(A), the turnover determining reference angle is set to $\pm 50°$ and turnover is determined by a state in which the output voltage value of the Y-axis sensor in correspondence therewith is larger than ($g \cdot \sin(50°)$) or a state in which the output voltage value is smaller than ($g \cdot \sin(-50°)$). When the state continues for 2 seconds or more, turnover is determined.

In the case in which even when turnover is determined by the Z-axis sensor, the Y-axis sensor detects that the vehicle body is not determined in the left and right direction, this is the state in which the vehicle body is inclined in the front and rear direction by willing running or the like and routine of normal control is repeated.

Step e4: When turnover is determined, the fuel pump is stopped and fuel injection and ignition are stopped to thereby stop the engine. As described above, it is preferable to gradually reduce the engine output.

Accordingly, within the description above, there is disclosed (amongst others) a turnover detecting apparatus of a motor cycle characterized in that in a turnover detecting apparatus of a motor cycle having a turnover sensor for detecting turnover based on an inclination angle of an ECU for controlling to drive an engine and a vehicle body wherein the turnover sensor is constituted by an acceleration sensor, the acceleration sensor is integrated into the ECU, and a direction of detecting an acceleration when the vehicle body is brought into an uninclined state is arranged in a direction vertical to a ground.

According to the constitution, by constituting the turnover sensor by the acceleration sensor and integrating the acceleration sensor in ECU to thereby integrally unitize, the detecting accuracy of turnover can be promoted and the constitution can be simplified, by constituting arrangement of the acceleration sensor by vertical arrangement, that is, arrangement in which a direction of detecting acceleration when the vehicle body is brought into the uninclined state, constitutes a direction vertical to the ground, when the vehicle body is turned over by exceeding a bank angle or brought into a turnover state, a change in a detecting output relative to a change in an inclination angle at a vicinity of the bank angle (65 through 70°) constituting an angle of determining the turnover state, is large and therefore, a change in the angle in a constant A/D conversion output width is reduced and therefore, the conversion error can be reduced and reliability can be promoted by increasing accuracy of determining turnover.

A preferable constitution example of said turnover detecting apparatus is characterized in that the acceleration sensor constitutes a first detecting direction by the detecting direction vertical to the ground and detects an acceleration in a second detecting direction along with the acceleration in the first detecting direction and in a direction orthogonal to the first detecting direction.

Thus, by using a biaxial or triaxial acceleration sensor, necessarily constituting the vertical detecting direction (first detecting direction) with regard to one axis and detecting the acceleration in the second detecting direction with regard to a vehicle width direction or a front and rear direction, when a turnover angle is exceeded by detecting the angle in the first detecting direction, based on a result of detection in the second detecting direction, inclination of the vehicle body by willing running or slope running can be prevented from being determined erroneously as turnover.

A further preferable constitution example of said turnover detecting apparatus is characterized in that the acceleration in the first detecting direction is detected based on a difference from a previously set reference value in the uninclined state and the acceleration in the second detecting direction is detected based on an amount of changing the acceleration.

Therefore, when the inclination angle of the vehicle body is determined based on the difference from the reference value with an offset error of detecting data based on an attaching error or the like corrected with regard to the first detecting direction and it is determined whether there is a change in the inclination with regard to the second detecting direction for determining the inclination other than that of turnover by willing running or the like, turnover or willing running or the like can be identified and therefore, it is not necessary to calculate the difference from the reference value and therefore, it is not necessary to correct the offset error of the reference value.

A further preferable constitution example of the turnover detecting apparatus is characterized in that a threshold of determining the turnover in the first detecting direction is changed based on an angle of attaching the acceleration sensor.

Thus, when the acceleration sensor is attached inclined to the up and down direction of the vehicle body by the error of attaching ECU integrated with the acceleration sensor to the vehicle body, by changing the threshold for determining turnover in correspondence with the inclined angle, the detection accuracy can be promoted. In this case, the threshold is changed in accordance with the left and right direction by determining the inclination direction in the left and right direction from the output in the second detecting direction.

Further preferable constitution example of the turnover detecting apparatus is characterized in that when a running speed is equal to or larger than a constant value and the amount of changing a detecting output of the acceleration sensor is equal to or smaller than a constant value, a detected average value of the acceleration sensor is held as data of a central value and the turnover is determined with the central value as the reference value.

According to this constitution, when the running speed is equal to or larger than the constant value and the change in the output of the acceleration sensor is equal to or smaller than the constant value, it is determined that the vehicle body is running in the straight attitude in which the vehicle body is hardly inclined and the average value of the sensor output at this occasion is held as the central value. By detecting the change from the central value, a deterioration in the detection accuracy by the dispersion in the temperature characteristic or the offset by the attaching error of the sensor or the ageing change or the like can be prevented.

As explained above, by constituting the turnover sensor by the acceleration sensor and assembling the acceleration sensor in ECU to thereby integrally unitize, the detection accuracy of turnover can be promoted and the constitution can be simplified, and also by constituting arrangement of the acceleration sensor by the vertical arrangement, that is, arranging the acceleration detecting direction in the uninclined state of the vehicle body to constitute the direction vertical to the ground, when the vehicle body is turned over by exceeding the bank angle or brought into the turnover state, a change in the detecting output relative to the change in the inclination angle at a vicinity of the bank angle (65 through 70°) constituting the determining angle in the turnover state, is large and therefore, the change in the angle within the constant A/D conversion output width is reduced and therefore, the conversion error can be reduced and reliability can be promoted by promoting the accuracy of determining turnover.

Further, according to the constitution of the acceleration sensor in which the first detecting direction is constituted by the detecting direction vertical to the ground and the accelerations in the first detecting directions as well as the second detecting direction orthogonal thereto are detected, by using the biaxial or triaxial acceleration sensor, necessarily constituting the vertical detecting direction (first detecting direction) with respect to one axis and detecting the acceleration in the second detecting direction with regard to the vehicle width direction or the front and rear direction, when the turnover angle is exceeded by detecting the angle in the first detecting direction, based on the detection result in the second detecting direction, the inclination of the vehicle body by willing running or steep slope running can be prevented from being determined erroneously as turnover.

Further, according to the constitution in which the acceleration in the first detecting direction is detected based on the difference from the previously set reference value in an uninclined state and the acceleration in the second detecting direction is detected based on the amount of changing the acceleration, when the inclination angle of the vehicle body is determined based on the difference from the reference value with the offset error of the detection data based on the attaching error or the like corrected with regard to the first detecting direction and it is determined whether there is the change in the inclination with regard to the second detecting direction for determining the inclination other than turnover by willing running or the like, turnover or willing running or the like can be identified and therefore, it is not necessary to calculate the difference from the reference value and therefore, it Is not necessary to correct the offset error of the reference value.

According to the constitution of changing the threshold In determining turnover In the first detecting direction based on the attaching angle of the acceleration sensor, when the acceleration sensor is attached to be inclined relative to the up and down direction of the vehicle body by the attaching error of ECU integrated with the acceleration sensor to the vehicle body, the detection accuracy can be promoted by changing the threshold In determining turnover In correspondence with the inclined angle.

Further, according to the constitution In which the detected average value of the acceleration sensor In the case In which the running speed is equal to or larger than the constant value and the amount of changing the detecting output of the acceleration sensor is equal to or smaller than the constant value, is held as the central value and turnover Is determined with the central value as the reference value, when the running speed is equal to or larger than the constant value and the change In the output of the acceleration sensor Is equal to or smaller than the constant value, the vehicle body Is determined to be running In the straight attitude In which the vehicle body is hardly inclined and the average value of the sensor output In this case is held at the central value. By detecting the change from the central value, a deterioration In the detection accuracy by a dispersion In the temperature characteristic or offset by attaching error of the sensor or ageing change or the like can be prevented.

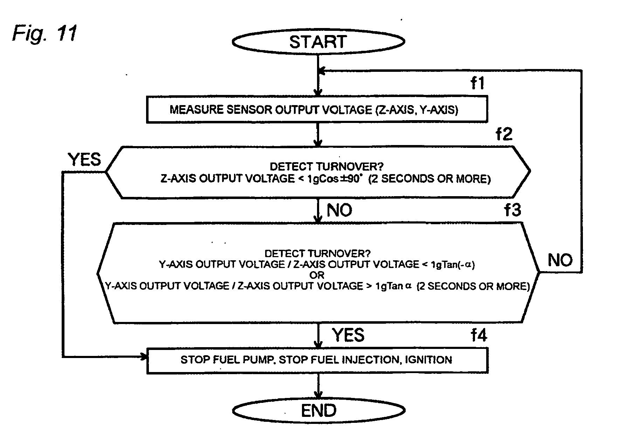

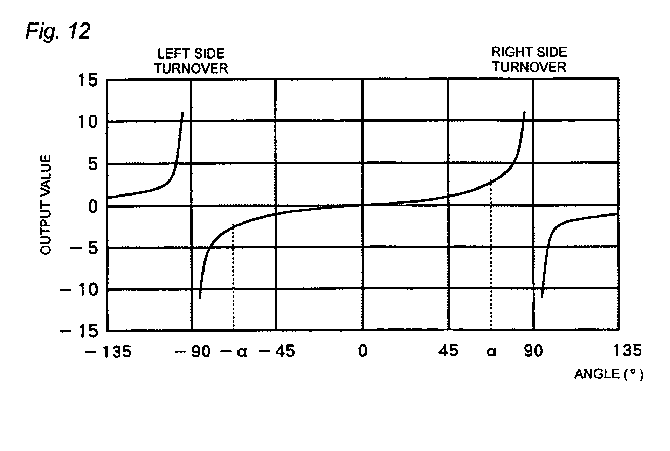

Fig. 11 is a flowchart of still another embodiment. Further, Fig. 12 is a graph of output data of tan (tangent) used in the embodiment.

When an acceleration sensor is provided at a motor cycle, noise is included in a sensor output by vibration of an engine, recesses and projections of a road or the like. Therefore, In the case In which with respect to a certain threshold, there is constituted a logic of determining turnover when the threshold is exceeded for a constant period of time, a set angle repeats to be larger or smaller than the threshold by vibration and turnover cannot be detected by the set angle. In this case, when a vibration component is eliminated by providing a low pass filter of, for example, a CR filter or the like, turnover can be detected by a turnover angle constituting the threshold. However, in this case, there arises a problem that a response time period is prolonged and a detection time period is prolonged.

Hence, according to the embodiment, by calculating tangent of an output of a vertical sensor and an output of a horizontal sensor and determining turnover by the tangent output, even when the respective sensors pick up vibration and noise is brought about, variations of the vertical sensor and the horizontal sensor are canceled by each other and turnover can be determined by the set detection angle.

Step f1: A biaxial acceleration sensor is vertically arranged and detecting directions are constituted by Z-axis (up and down direction) and Y-axis (left and right direction). Output voltage of the acceleration sensor is detected with respect to Z-axis and Y-axis directions.

Step f2: Upside-down turnover (turnover of $\pm90°$ or more) is determined by detecting output voltage of a Z-axis direction sensor. That is, in the above-described cosine curve of Fig. 2(A), a turnover determining angle is set to $\pm90°$ and it is determined whether there is constituted a state in which the detecting output voltage is smaller than an output voltage value ($g \cdot \cos(\pm90°)$) in correspondence therewith. When the state continues for 2 seconds or more, upside-down turnover is determined. Further, as described above, the required condition is constituted by continuation of the state for 2 seconds or more to promote reliability in determining turnover by detecting the voltage.

When upside-down turnover is determined at this occasion, the operation immediately proceeds to step f4 and carries out turnover control of stopping the fuel pump or the like.

Step f3: When it is determined that upside-down turnover is not constituted (no inclined by $\pm90°$ or more) by the Z-axis direction sensor at the above-described step f2, turnover (turnover within $\pm90°$) or not is determined further by the detecting output voltages of the Z-axis sensor and a Y-axis direction sensor.

That is, first, the output voltage of the horizontal Y-axis sensor of Fig. 1(A) and the output voltage of the vertical Z-axis sensor of Fig. 2(A) are detected and the tangent (tan)=(Y-axis output voltage)÷(Z-axis output voltage) is calculated by operation. When a turnover angle is designated by notation $\alpha$, it is determined whether the tan output value is smaller than $1g \cdot \tan(-\alpha)$ or larger than $1g \cdot \tan \alpha$. When either of the conditions is satisfied continuously for 2 seconds or more, turnover is determined. The required condition is constituted by continuation of the state for 2 seconds or more to promote reliability in determining turnover by the tangent output value. When neither of the conditions are satisfied, it is not determined as turnover.

Explaining in reference to the graph, Fig. 12 shows a tangent curve output provided by the sine curve output from the horizontal Y-axis sensor of Fig. 1(A) and the cosine curve output from the vertical Z-axis sensor of Fig. 2(A). In Fig. 12, the vehicle body angle falls in a range of from -90° to +90° because it is not determined as upside-down turnover in the above-described step f2. It is determined whether the turnover angle $\alpha$ is exceeded on the left side (-side) or the right side (+side) of the vehicle body in the range.

The turnover angle $\alpha$ is set in consideration of a vehicle kind of a scooter type or a normal autobicycle type, a vehicle dimension or a displacement or the like. The $\alpha$ may be made rewritable on a program in accordance with the vehicle kind or the like.

By determining turnover by tangent of the two sensor outputs by using the biaxial sensor including the vertical sensor in this way, the noises are canceled by each other and therefore, even when the variation is brought about in the sensor output by vibration or the like, turnover can surely be determined.

Step f4: When turnover is determined, the fuel pump is stopped and fuel injection and ignition are stopped to thereby stop the engine. At this occasion, as described above, it is preferable to gradually reduce the engine output.

From the above description, there is derivable a turnover detecting apparatus of a motor cycle characterized in that in a turnover detecting apparatus of a motor cycle having a turnover sensor for detecting turnover based on an inclination angle of an ECU for controlling to drive an engine and a vehicle body wherein the turnover sensor is constituted by an acceleration sensor, the acceleration sensor is integrated into the ECU, and a direction of detecting an acceleration when the vehicle body is brought into an uninclined state is arranged in a direction vertical to a ground.

According to this constitution, by constituting the turnover sensor by the acceleration sensor and integrating the acceleration sensor in ECU to thereby integrally unitize, the detecting accuracy of turnover can be promoted and the constitution can be simplified, by constituting arrangement of the acceleration sensor by vertical arrangement, that is, arrangement in which a direction of detecting acceleration when the vehicle body is brought into the uninclined state, constitutes a direction vertical to the ground, when the vehicle body is turned over by exceeding a bank angle or brought into a turnover state, a change in a detecting output relative to a change in an inclination angle at a vicinity of the bank angle (65 through 70°) constituting an angle of determining the turnover state, is large and therefore, a change in the angle in a constant A/D conversion output width is reduced and therefore, the conversion error can be reduced and reliability can be promoted by increasing accuracy of determining turnover.

A preferable constitution example is characterized in that the acceleration sensor constitutes a first detecting direction by the detecting direction vertical to the ground and detects an acceleration in a second detecting direction along with the acceleration in the first detecting direction and in a direction orthogonal to the first detecting direction.

Therefore, by using a biaxial or triaxial acceleration sensor, necessarily constituting the vertical detecting direction (first detecting direction) with regard to one axis and detecting the acceleration in the second detecting direction with regard to a vehicle width direction or a front and rear direction, when a turnover angle is exceeded by detecting the angle in the first detecting direction, based on a result of detection in the second detecting direction, inclination of the vehicle body by willing running or slope running can be prevented from being determined erroneously as turnover.

A further preferable constitution example is characterized in that the acceleration in the first detecting direction is detected based on a difference from a previously set reference value in the uninclined state and the acceleration in the second detecting direction is detected based on an amount of changing the acceleration.

Thus, when the inclination angle of the vehicle body is determined based on the difference from the reference value with an offset error of detecting data based on an attaching error or the like corrected with regard to the first detecting direction and it is determined whether there is a change in the inclination with regard to the second detecting direction for determining the inclination other than that of turnover by willing running or the like, turnover or willing running or the like can be identified and therefore, it is not necessary to calculate the difference from the reference value and therefore, it is not necessary to correct the offset error of the reference value.

A further preferable constitution example is characterized in that a threshold of determining the turnover in the first detecting direction is changed based on an angle of attaching the acceleration sensor.

According to this constitution, when the acceleration sensor is attached inclined to the up and down direction of the vehicle body by the error of attaching ECU integrated with the acceleration sensor to the vehicle body, by changing the threshold for determining turnover in correspondence with the inclined angle, the detection accuracy can be promoted. In this case, the threshold is changed in accordance with the left and right direction by determining the inclination direction in the left and right direction from the output in the second detecting direction.

Further preferable constitution example is characterized in that when a running speed is equal to or larger than a constant value and the amount of changing a detecting output of the acceleration sensor is equal to or smaller than a constant value, a detected average value of the acceleration sensor is held as data of a central value and the turnover is determined with the central value as the reference value.

According to this constitution, when the running speed is equal to or larger than the constant value and the change in the output of the acceleration sensor is equal to or smaller than the constant value, it is determined that the vehicle body is running in the straight attitude in which the vehicle body is hardly inclined and the average value of the sensor output at this occasion is held as the central value. By detecting the change from the central value, a deterioration in the detection accuracy by the dispersion in the temperature characteristic or the offset by the attaching error of the sensor or the ageing change or the like can be prevented.

A further preferable constitution example is characterized in further comprising a sensor in a vertical direction and a sensor in a horizontal direction, wherein the turnover is determined based on (horizontal sensor output) ÷ (vertical sensor output).

According to this constitution, turnover can be detected highly reliably with no erroneous determination in a short period of time without using a noise removing filter or the like even when an output value of detecting turnover is varied by vibration of the vehicle body or the like.

That is, when the acceleration sensor is used as a turnover sensor for a motor cycle, there is a case in which an angle of detecting turnover constituting a threshold of determining turnover is changed by vibration of the vehicle body or the like. In order to deal therewith, the angle of detecting turnover can be maintained constant by removing a vibration component by providing a filter in a control circuit. However, when the filter is provided, there is brought about a concern that a long response time period is taken, a detecting time period is prolonged and the turnover is dealt with retardedly.

Therefore, there is requested a turnover sensor capable of detecting turnover with no erroneous determination by eliminating a variation in the turnover detecting angle caused by vibration of a vehicle body or the like without prolonging a detection time period. Such a request is also met by the embodiment.

As explained above, by constituting the turnover sensor by the acceleration sensor and assembling the acceleration sensor in ECU to thereby integrally unitize, the detection accuracy of turnover can be promoted and the constitution can be simplified, and also by constituting arrangement of the acceleration sensor by the vertical arrangement, that is, arranging the acceleration detecting direction in the uninclined state of the vehicle body to constitute the direction vertical to the ground, when the vehicle body is turned over by exceeding the bank angle or brought into the turnover state, a change in the detecting output relative to the change in the inclination angle at a vicinity of the bank angle (65 through 70°) constituting the determining angle in the turnover state, is large and therefore, the change in the angle within the constant A/D conversion output width is reduced and therefore, the conversion error can be reduced and reliability can be promoted by promoting the accuracy of determining turnover.

Further, according to the constitution of the acceleration sensor in which the first detecting direction is constituted by the detecting direction vertical to the ground and the accelerations in the first detecting directions as well as the second detecting direction orthogonal thereto are detected, by using the biaxial or triaxial acceleration sensor, necessarily constituting the vertical detecting direction (first detecting direction) with respect to one axis and detecting the acceleration in the second detecting direction with regard to the vehicle width direction or the front and rear direction, when the turnover angle is exceeded by detecting the angle in the first detecting direction, based on the detection result in the second detecting direction, the inclination of the vehicle body by willing running or steep slope running can be prevented from being determined erroneously as turnover.

Further, according to the constitution in which the acceleration in the first detecting direction is detected based on the difference from the previously set reference value in an uninclined state and the acceleration in the second detecting direction is detected based on the amount of changing the acceleration, when the inclination angle of the vehicle body is determined based on the difference from the reference value with the offset error of the detection data based on the attaching error or the like corrected with regard to the first detecting direction and it is determined whether there is the change in the inclination with regard to the second detecting direction for determining the inclination other than turnover by willing running or the like, turnover or willing running or the like can be identified and therefore, it is not necessary to calculate the difference from the reference value and therefore, it is not necessary to correct the offset error of the reference value.

According to the constitution of changing the threshold in determining turnover in the first detecting direction based on the attaching angle of the acceleration sensor, when the acceleration sensor is attached to be inclined relative to the up and down direction of the vehicle body by the attaching error of ECU integrated with the acceleration sensor to the vehicle body, the detection accuracy can be promoted by changing the threshold in determining turnover in correspondence with the inclined angle.

Further, according to the constitution in which the detected average value of the acceleration sensor in the case in which the running speed is equal to or larger than the constant value and the amount of changing the detecting output of the acceleration sensor is equal to or smaller than the constant value, is held as the central value and turnover is determined with the central value as the reference value, when the running speed is equal to or larger than the constant value and the change in the output of the acceleration sensor is equal to or smaller than the constant value, the vehicle body is determined to be running in the straight attitude in which the vehicle body is hardly inclined and the average value of the sensor output in this case is held at the central value. By detecting the change from the central value, a deterioration in the detection accuracy by a dispersion in the temperature characteristic or offset by attaching error of the sensor or ageing change or the like can be prevented.

Further, according to the constitution having a sensor in a vertical direction and a sensor in a horizontal direction for determining turnover based on (horizontal sensor output) ÷ (vertical sensor output), even when the output value of detecting turnover is varied by vibration of the vehicle body or the like, turnover can be detected highly reliably with no erroneous determination in a short period of time without using a noise removing filter or the like.

An explanation will be given of a structure of attaching ECU integrated with the above-described turnover sensor to the vehicle body as follows.

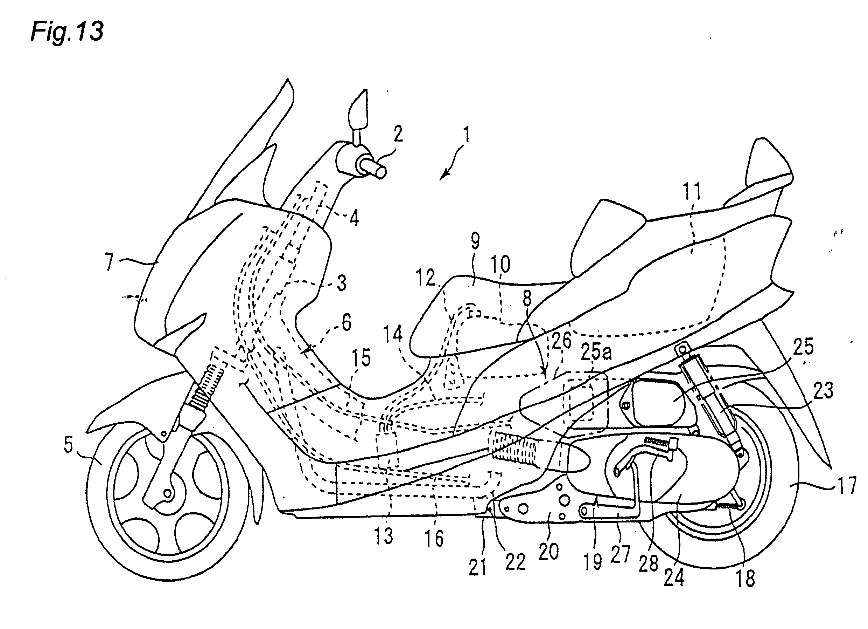

Fig. 13 is an outlook view of a small-sized motorcycle to which the technical teaching is applied.

A vehicle body 1 has a handlebar 2 at its front portion, and the handlebar 2 is connected to a front wheel 5 via a steering shaft 4 through which a head pipe 3 is passed. A vehicle body frame 6 is joined to the head pipe 3. The vehicle body frame 6 forms a frame structure of the whole vehicle body. The front portion of the vehicle body Is covered with a cowling 7. The vehicle body 1 Is covered with a vehicle body cover 8 from the outside. A seat 9 is provided In the center of the vehicle body 1, a fuel tank 10 is provided under the seat 9 and a helmet box (container) 11 is provided In the back of the seat 9. The fuel tank 10 supplies fuel to an Injector (not shown) via a fuel hose (not shown). One end of a breather hose 12 is connected to the top of the fuel tank 10 and the other end is connected to a canister 13. The canister 13 is connected to an intake system (for example, throttle body) via a purge hose 14. A throttle wire 15 is fixed to a throttle grip (or lever) on a right side handlebar part (not shown) and is connected to the throttle valve of the intake system. Similarly, a brake cable 16 is fixed to a brake lever (not shown) on the handlebar part and is connected to a brake camshaft 18 of a rear wheel 17.

An engine unit 19 is installed on the vehicle body frame 6 in the center of the vehicle body 1. The engine unit 19 includes an engine (not shown) and a speed reduction unit 24 integrally combined with its crankcase (not shown). This engine unit 19 is hung on a bottom vehicle body frame member 21 constituting a part of the vehicle body frame 6 via an engine bracket 20 so that it can turn around a pivot 22. A rear wheel 17 is connected to the rear portion of the engine unit 19 and the bottom end of a damper 23 is connected thereto so as to be able to turn. The top end of the damper 23 is connected to a rear vehicle body frame (not shown) constituting a part of the vehicle body frame 6 so as to be able to turn. This enables the engine unit 19 to swing around the pivot 22 with the rear wheel 17. In this manner, a swing unit type engine is formed.

An air deaner 25 is mounted on the top side of the speed reduction unit 24. An outside air intake opening 25a is made in the front portion of the air deaner 25 and a dust prevention cover 26 made of rubber or resin is provided inside the vehicle body cover 8 so as to cover the opening. A reference numeral 27 denotes a stand and 28 denotes a kick lever.

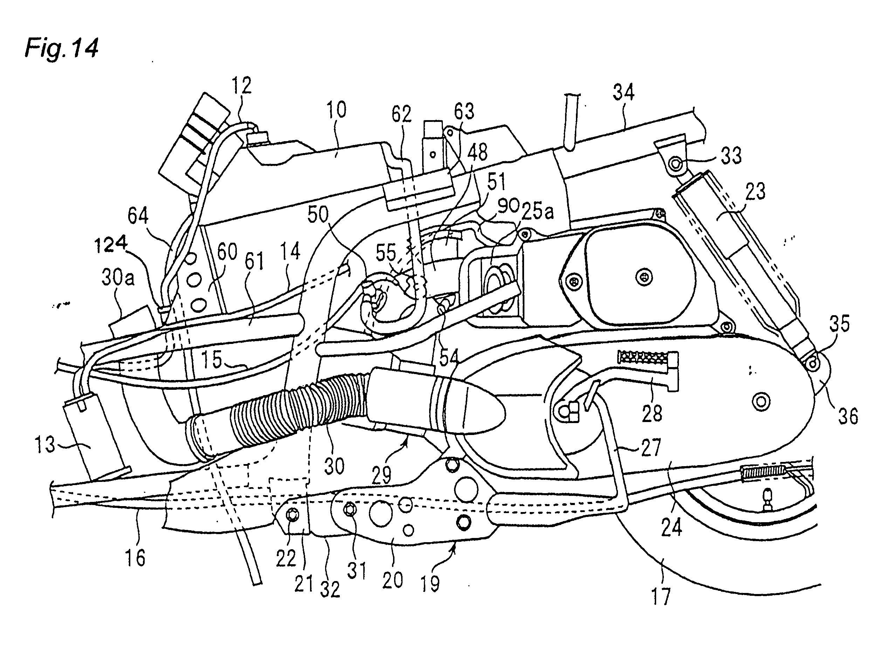

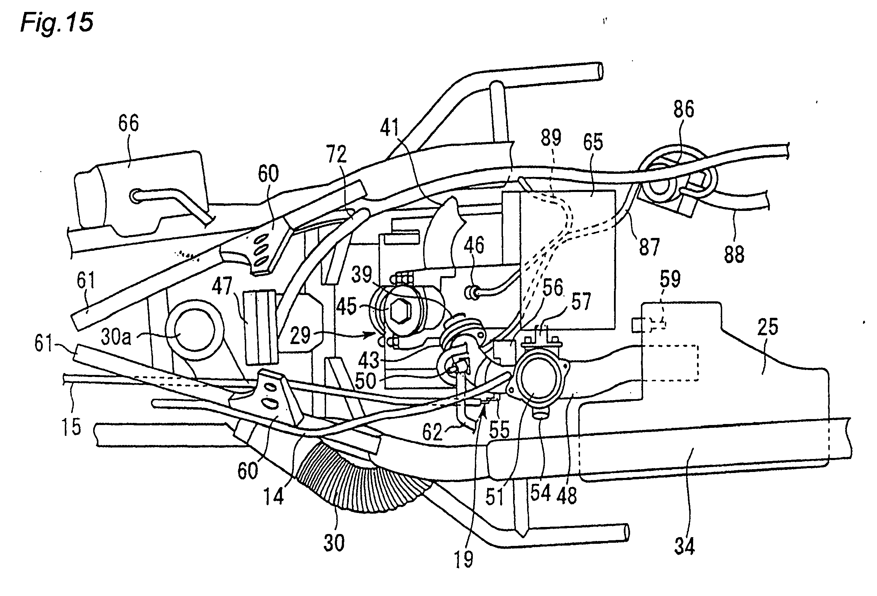

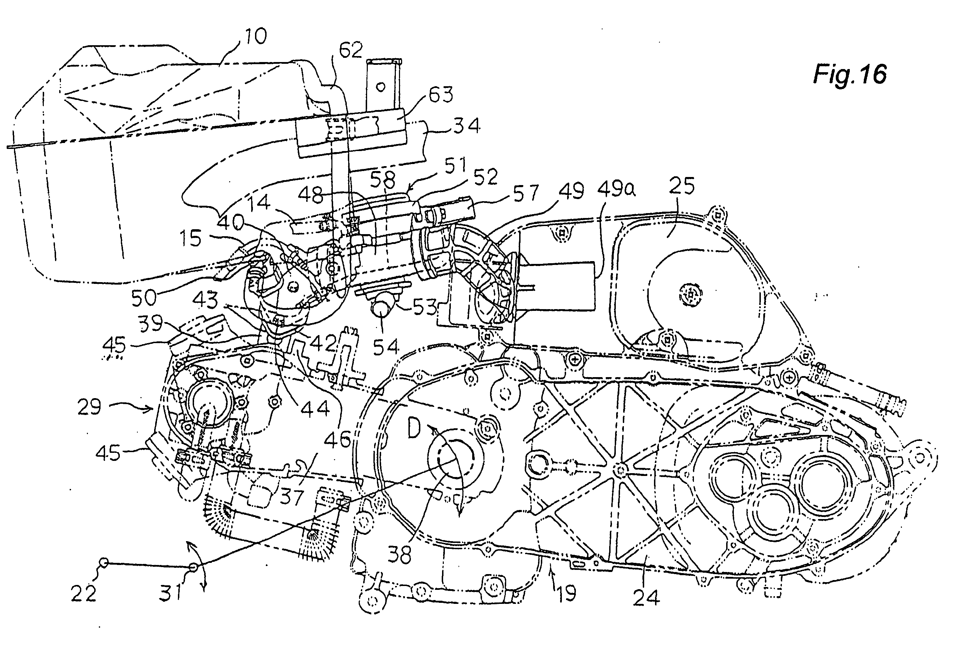

Fig. 14 and Fig. 15 are a side view and a plan view to show a main portion of the motorcycle having a fuel injection engine in accordance with the technical teaching, respectively. Moreover, Fig. 16 is an enlarged view of its intake system portion.

An engine 29 is provided under the fuel tank 10. The engine 29 is a four-cycle single cylinder engine having a fuel injector. The crankcase (not shown) of the engine 29 is integrally combined with the speed reduction unit 24 constructed of a V-belt type continuously variable speed reduction mechanism, for example, to constitute the engine unit 19 of the swing unit engine type as a whole. A duct 30 is connected to the front portion of the speed reduction unit 24 and the outside air is sucked from its opening end 30a and is supplied into the speed reduction unit 5 to cool its inside. A rear output shaft (not shown) of the speed reduction unit 24 is connected to the axle of the rear wheel 17.

The engine bracket 20 is Integrally combined with the front portion of the engine unit 19 of the swing unit engine type. A link plate 32 is rotatably mounted on the engine bracket 20 via a shaft 31. The link plate 32 is mounted on the bottom vehicle frame member 21 via the pivot 22 so as to turn.

The damper (shock absorber) 23 is provided on the rear portion of the engine unit 19. The top end 33 of the damper 23 is rotatably mounted on a rear vehicle body frame member 34 and the bottom end 35 thereof is rotatably mounted on a bracket 36 on the rear end portion of the engine unit 19. In this manner, the engine unit 19 is mounted on the vehicle body frame in such a way as to be able to swing around the pivot 22 on its front side. As shown in Fig. 16, the cylinder 37 of the engine 29 is inclined forward nearly to a horizontal level. A crankshaft 38 swings with the shaft 31 of the engine bracket 20 (Fig. 14) around the above-mentioned pivot 22 in the manner shown by an arrow D.

On the intake side of the engine 29 are provided an intake manifold 39 communicating with an intake port (not shown) of a cylinder head and an intake pipe 40 (Fig. 15, Fig. 16) connected to the intake manifold 39, whereas to its exhaust side is connected an exhaust pipe 41 (Fig. 15). The intake pipe 40 is the intake pipe bent and shaped like an elbow and, as shown in Fig. 16, is fixed to the intake manifold 39 by means of two bolts 44 with its flange 43 made to abut on that of the intake manifold 39 via a heat insulating member 42 made of resin. A reference numeral 45 is a maintenance cover of a valve train cam. The engine 29 is mounted with a water temperature sensor 46 (Fig. 15, Fig. 16). The detection output signal of the water temperature sensor 46 is sent to an engine control unit 47 (Fig. 15) via a water temperature signal cable 89 (Fig. 15) and a wire harness 72. To the engine control unit 47 via the wire harness 72 are further connected detection signal cables (not shown) of an intake air temperature and an intake pressure sensor, both of which will be described below. A throttle valve (not shown) is opened or closed based on these detection data.

A throttle body 48 is connected to the intake manifold 39 via the above-mentioned intake pipe 40 that is bent and shaped like an elbow. The throttle body 48 is connected to the air cleaner 25 via a joint 49. On the intake pipe 40 is mounted an injector 50.

In the throttle body 48 is mounted the throttle valve (not shown) and on its upstream side is mounted a suction piston 51 of a diaphragm type. In the suction piston 51, as will be described below, its diaphragm chamber 52 is made in the top side of the throttle body 48 and an air intake port 54 (open to outside air) of an air passage 53 for introducing air into the diaphragm chamber 52 is made in the bottom side in the throttle body 48. The throttle wire 15 connected to the throttle lever or the throttle grip (both not shown) is connected to the valve shaft of the throttle valve via a link 55.

The air intake opening 25a in the front portion of the air cleaner 25 is covered with the dust prevention cover 26 (shown by a single dot and dash line in Fig. 13) made of rubber or resin. Another vehicle body cover is further mounted on the outside of the dust prevention cover 26. The air intake port 54 of the suction piston 51 is made inside the dust prevention cover 26.

An automatic choke 56 of a heater wax type and an intake pressure sensor 57 are provided next to the suction piston 51 on the throttle body 48 (Fig. 15). The automatic choke 56 opens or closes a bypass pipe (not shown) for making the upstream side of the throttle valve communicating with the downstream side thereof. The intake pressure sensor 57 communicates with the intake manifold 39 or the intake pipe 40 via a negative pressure hose 58 (Fig. 16). An intake air temperature sensor 59 (Fig. 15) is provided in the air cleaner 25.

Incidentally, the intake pressure sensor 57 may be provided near the intake manifold. Moreover, a throttle position sensor (not shown) may be provided on the valve shaft of the throttle valve opposite to the link 55. In this case, the automatic choke 56 is provided on the upstream side of the throttle valve so that it does not interfere with the throttle position sensor.

The front side bottom portion of the fuel tank 10 is fixed to left and right vehicle body frames 61 via brackets 60. A fuel hose 62 is pulled out of the rear side of the fuel tank 10 to supply the injector 50 with fuel. The fuel hose 62 is fixed to the rear vehicle body frame member 34 via a stay 63 (Fig. 14, Fig. 16). A reference numeral 64 (Fig. 14) denotes an overflow pipe, 65 (Fig. 15) denotes a battery, 66 (Fig. 15) denotes a recovery tank of coolant. On the right side in the center of the vehicle body, as shown in Fig. 15, is provided a secondary air introduction system 86 for cleaning exhaust gas. This secondary air introduction system 86 communicates with the intake manifold via a negative pressure hose 87 and supplies outside air to a catalyst (not shown) via an air hose 88 in response to an intake negative pressure to burn the exhaust gas again.

To the air cleaner 25, as shown in Fig. 14, is connected a blowby gas hose 90. This blowby gas hose 90 communicates with a cam chain chamber (not shown) communicating with the crankcase (not shown) of the engine 29 and prevents an oil seal from being dropped or a power from being lost by a pressure rise in the crankcase of the engine. The blowby gas hose 90 is connected to a clean side after passing of an element in the air cleanser and the blowby gas is again introduced into a combustion chamber.

The fuel tank 10, as shown above in Fig. 13, communicates with the canister 13 via the breather hose 12. At the middle of the breather hose 12 is provided a rollover valve 124. This rollover valve 124 is closed when the vehicle is turned over to prevent the fuel from flowing from the fuel tank 10.

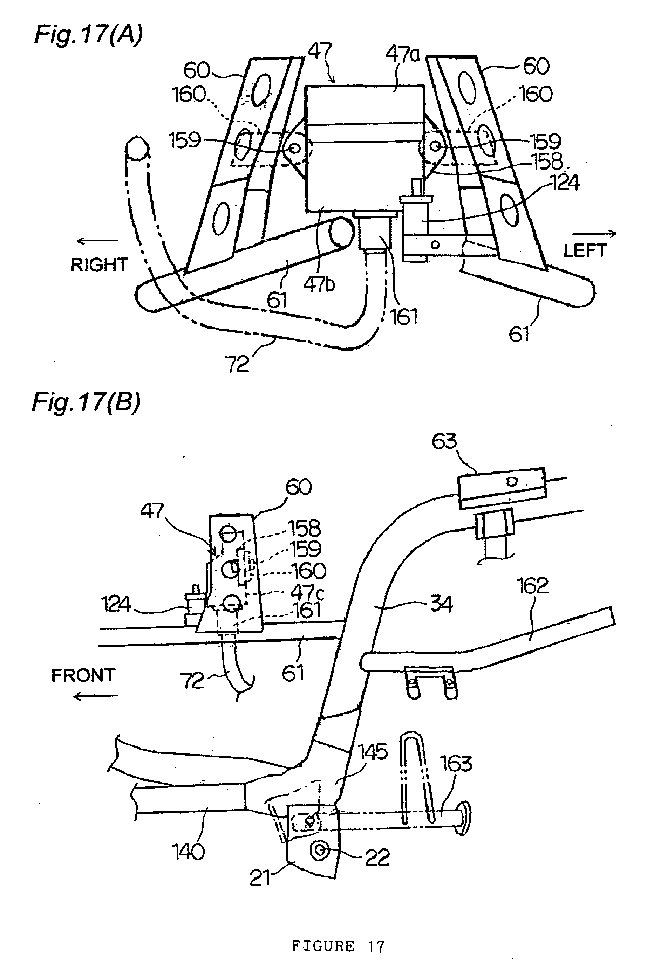

Figs. 17(A), 17(B) are a front side view and a left side view of a portion where the engine control unit is installed.

The engine control unit (ECU) 47, in this arrangement example, is substantially rectangular shape in which a bottom part 47b protruding to the front side is larger in thickness than a top part 47a to form a stepped shape, has a rectangular mounting plane 47c on the rear side, and has ear parts 158 extending to the left and right sides on the same plane of the mounting plane 47c. Each of the ear parts 158 is fixed to a stay 160 welded to the inside of the bracket 60 for supporting the fuel tank by a bolt 159. The wire harness 72 is connected to the bottom of the ECU 47 via a coupler 161.

The bracket 60 is joined to the vehicle body frame member 61 joined to each of the left and right rear vehicle body frame members 34. Each of the left and right rear vehicle body frame members 34 is joined to a front vehicle body frame member 140 via an elbow frame 145. To the elbow frame 145 is joined the above-mentioned bottom vehicle frame member 21 described above and on the bottom vehicle frame member 21 is mounted the pivot 22 for supporting the above-mentioned engine unit 19 (Fig. 13, Fig. 14) so that the above-mentioned engine 19 can swing. A reference numeral 162 denotes a footrest pipe frame for a tandem rider and 163 denotes a side stand.

The fuel tank (not shown) is supported by a support part (not shown) provided across the top portions of the left and right brackets 60 and the stay 63 provided on the top of the rear vehicle body frame 34.

In the ECU 47 is received a circuit board (not shown) arranged in parallel to the mounting plane 47c and a two-dimensional (biaxial) acceleration sensor (not shown) is mounted on the circuit board with its detection surface in parallel to the surface of the circuit board. Therefore, the turnover sensor (which could also be utilized as a rollover sensor) including the two-dimensional acceleration sensor is mounted with its detection surface nearly vertical to the front and rear direction of the vehicle body at a position protected by the left and right brackets 60 nearly in the center in the left and right direction of the vehicle body.

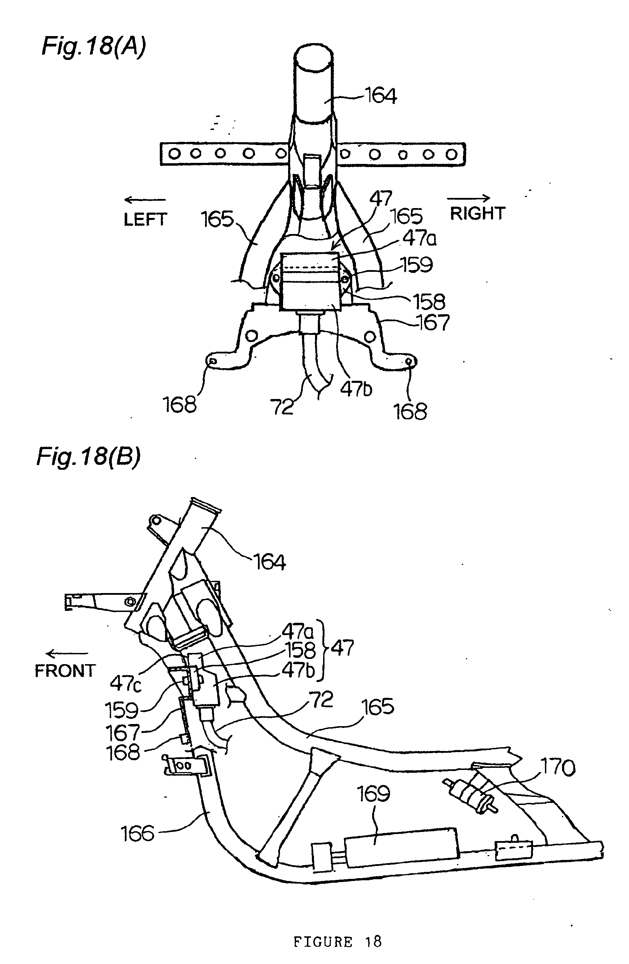

Figs. 18(A), 18(B) are a rear side front view and a left side view of a structure for installing an ECU in accordance with another embodiment, respectively.

In this example is shown a structure in which two upper pipe frames 165 and two lower pipe frames 166 are welded to the left and right sides of the rear portion of a head pipe 164 constituting the front part of the vehicle body, respectively, and in which the ECU 47 is mounted at a position surrounded by these four pipe frames 165, 166. In the ECU 47, its ear parts 158 are fixed to a bracket 167 by bolts 159 with its mounting plane 47c faced to the front side. In the bracket 167, its forked bottom parts are fixed to the left and right lower pipe frames 166 by bolts 168. The bracket 167 further may be fixedly welded to the lower pipe frames 166 at the appropriate portions of its both side edge portions.

A reference numeral 169 denotes an electromagnetic pump for supplying fuel and 170 denotes a filter provided in the middle of a fuel hose (not shown) between the electromagnetic pump 169 and the fuel tank (not shown).

Also in this embodiment, the ECU 47 is mounted in a state where its mounting plane 47c parallel to the detection surface of the turnover sensor (rollover sensor) including the two-dimensional acceleration sensor provided therein is nearly vertical to the front and rear direction of the vehicle body at a position protected by the left and right pipe frames 165, 166 nearly in the center in the left and right direction of the vehicle body.

From the above description, there is derivable a structure for installing an engine control unit for a motorcycle having a rollover sensor (a turnover sensor), characterized in that the above-mentioned rollover sensor includes a two-dimensional acceleration sensor and is received in the engine control unit and that the engine control unit is installed on a vehicle frame in such a way that the detection surface of the rollover sensor is nearly vertical to a front and rear direction of a vehicle body.

According to this constitution, the two-dimensional acceleration sensor is used as the rollover sensor (turnover sensor) and its two-dimensional detection surface is arranged nearly vertical to the front and rear direction of the vehicle body, so a state of rollover can be surely detected in which the vehicle body is inclined in the left and right direction and is rolled over, and further the engine control unit for receiving the rollover sensor can be mounted in a state slightly inclined in the front and rear direction, so the parts can be easily arranged. Moreover, since the rollover sensor is integrally combined with the engine control unit (ECU), the constitution of the parts can be made simple and thus the parts can be arranged efficiently in a narrow space without limiting the arrangement of the other parts.

A preferable example of constitution is characterized in that the above-mentioned engine control unit is mounted in the center in a left and right direction of the vehicle body.

According to this constitution, it is possible to detect a vehicle being inclined or rolled over either in the left direction or in the right direction with high accuracy and thus to improve reliability in the detection of rollover, and the engine control unit can be protected by the vehicle body frames on both sides and thus can be prevented being damaged when the vehicle is rolled over or inclined.

Another preferable example of constitution is characterized in that brackets for mounting a fuel tank are fixed to vehicle body frame members arranged on left and right sides in the center of the vehicle body, and that the engine control unit is arranged between these left and right brackets, and that the engine control unit is fixed to the respective brackets via stays.

According to this constitution, the ECU can be arranged efficiently in a space between the left and right brackets for mounting a fuel tank in the center of the vehicle body and thus the distances from the ECU to various kinds of sensors around an engine such as a water temperature sensor and an intake air temperature sensor and engine driving components such as an injector, a throttle valve, and an ignition coil can be made shorter to shorten a wire harness made of signal cables and the like to thereby simplify a layout around the engine.

As described above, said two-dimensional acceleration sensor is used as the rollover sensor (turnover sensor) and its two-dimensional detection surface is arranged nearly vertical to the front and rear direction of the vehicle body, so a state of rollover can be surely detected where the vehicle body is inclined and rolled over in the left and right direction, and further the engine control unit for receiving the rollover sensor can be mounted in a state slightly inclined in the front and rear direction, so the parts can be easily arranged. Moreover, since the rollover sensor is integrally combined with the engine control unit (ECU), the constitution of these parts can be made simple and thus these parts can be arranged efficiently in a narrow space without limiting the arrangement of the other parts.

Moreover, by adopting the constitution in which the engine control unit is provided in the center in the left and right direction of the vehicle body, it is possible to detect the vehicle being inclined or rolled over either in the left direction or in the right direction with high accuracy and thus to improve reliability in the detection of rollover, and the engine control unit is mechanically protected by the vehicle body frames on both sides and thus is prevented from being damaged when the vehicle is rolled over.

Accordingly, there is provided a structure for installing an engine control unit that can be easily installed and be reduced in size, wherein in the structure for installing the engine control unit of a motorcycle having a rollover sensor, the rollover sensor includes a two-dimensional acceleration sensor and is received in an engine control unit 47 and the engine control unit is mounted on a vehicle body frame so that the detection surface of the rollover sensor is nearly vertical to the front and rear direction of the vehicle body. Preferably, the above-mentioned engine control unit 47 is mounted in the center in the left and right direction of the vehicle body.

From the above description, there is further derivable a turnover detecting apparatus of a motor cycle, characterized in that in a turnover detecting apparatus of a motor cycle including a turnover sensor for detecting turnover based on an inclination angle of an ECU for controlling to drive an engine and a vehicle body, constituting the turnover sensor by an acceleration sensor and integrating the acceleration sensor at inside of the ECU, wherein the acceleration sensor is arranged with a direction of detecting an acceleration when the vehicle body is brought into an uninclined state in a direction vertical to a ground to constitute a first detecting direction and an acceleration in a second detecting direction along with the first detecting direction and in a direction orthogonal thereto is detected.

According to this constitution, by constituting the turnover sensor by the acceleration sensor and integrating the acceleration sensor to inside of ECU to thereby integrally unitize, promotion of turnover detection accuracy and simplification of the constitution are achieved and the turnover sensor can be laid out efficiently in a narrow space without restricting arrangement of other parts. Along therewith, by arranging the acceleration sensor in vertical arrangement, that is, arrangement by which the direction of detecting the acceleration when the vehicle body is brought into the uninclined state, becomes a direction orthogonal to the ground, when a bank angle is exceeded and the vehicle body is turned over or brought into a turned over state, a change in a detected output relative to a change in the inclination angle at a vicinity of a bank angle (65 through 70°) constituting an angle of determining the turned over state, is large and therefore, the change in the angle within a constant A/D conversion output width becomes small and therefore, a conversion error can be reduced, accuracy of determining turnover can be promoted and reliability can be promoted.

Further, by using a biaxial or triaxial acceleration sensor, necessarily constituting the vertical detecting direction (first detecting direction) with regard to one axis and detecting the acceleration in the second detecting direction with regard to a vehicle width direction or a front and rear direction, when a turnover angle is exceeded by detecting the angle in the first detecting direction, based on a result of detection in the second detecting direction, inclination of the vehicle body by willing running or slope running can be prevented from being determined erroneously as turnover.

A preferable constitution example is characterized in that the acceleration in the first detecting direction is detected based on a difference from a previously set reference value in the uninclined state and the acceleration in the second detecting direction is detected based on an amount of changing the acceleration.

According to the constitution, when the inclination angle of the vehicle body is determined based on the difference from the reference value with an offset error of detecting data based on an attaching error or the like corrected with regard to the first detecting direction and it is determined whether there is a change in the inclination with regard to the second detecting direction for determining the inclination other than that of turnover by willing running or the like, turnover or willing running or the like can be identified and therefore, it is not necessary to calculate the difference from the reference value and therefore, it is not necessary to correct the offset error of the reference value.

A further preferable constitution example is characterized in that a threshold of determining the turnover in the first detecting direction is changed based on an angle of attaching the acceleration sensor.

According to this constitution, when the acceleration sensor is attached inclined to the up and down direction of the vehicle body by the error of attaching ECU integrated with the acceleration sensor to the vehicle body, by changing the threshold for determining turnover in correspondence with the inclined angle, the detection accuracy can be promoted. In this case, the threshold is changed in accordance with the left and right direction by determining the inclination direction in the left and right direction from the output in the second detecting direction.

Further preferable constitution example is characterized in that when a running speed is equal to or larger than a constant value and the amount of changing a detecting output of the acceleration sensor is equal to or smaller than a constant value, a detected average value of the acceleration sensor is held as data of a central value and the turnover is determined with the central value as the reference value.

According to this constitution, when the running speed is equal to or larger than the constant value and the change in the output of the acceleration sensor is equal to or smaller than the constant value, it is determined that the vehicle body is running in the straight attitude in which the vehicle body is hardly inclined and the average value of the sensor output at this occasion is held as the central value. By detecting the change from the central value, a deterioration in the detection accuracy by the dispersion in the temperature characteristic or the offset by the attaching error of the sensor or the aging change or the like can be prevented.

A further preferable constitution example is characterized in further comprising a sensor in a vertical direction and a sensor in a horizontal direction, wherein the turnover is determined based on (horizontal sensor output) ÷ (vertical sensor output).

According to this constitution, turnover can be detected highly reliably with no erroneous determination in a short period of time without using a noise removing filter or the like even when an output value of detecting turnover is varied by vibration of the vehicle body or the like.

That is, when the acceleration sensor is used as a turnover sensor for a motor cycle, there is a case in which an angle of detecting turnover constituting a threshold of determining turnover is changed by vibration of the vehicle body or the like. In order to deal therewith, the angle of detecting turnover can be maintained constant by removing a vibration component by providing a filter in a control circuit. However, when the filter is provided, there arises a concern that a long response time period is taken, a detecting time period is prolonged and the turnover is dealt with retardedly.

Therefore, there is requested a turnover sensor capable of detecting turnover with no erroneous determination by eliminating a variation in the turnover detecting angle caused by vibration of a vehicle body or the like without prolonging a detection time period. Such a request is also met by the embodiment.

A further preferable constitution example is characterized in that the turnover sensor comprises a two-dimensional acceleration sensor, the turnover sensor is contained at inside of the ECU and the ECU is attached to a vehicle body frame such that a detecting face of the turnover sensor becomes substantially vertical to a front and rear direction of the vehicle body.

According to this constitution, the two-dimensional (biaxial) acceleration sensor is used as the turnover sensor integrated to inside of ECU, the two-dimensional detecting face is arranged substantially orthogonally to the front and rear direction of the vehicle body, the ECU is attached to the vehicle body frame and therefore, the turnover sensor is firmly fixed to and held by the vehicle body and reliability of attachment and detection is promoted. Further, a degree of freedom of attachment can be promoted and arrangement of parts can be facilitated by attaching ECU containing the turnover sensor to the vehicle body frame with a slight inclination in the front and rear direction in correspondence with a space of arranging surrounding parts or the like.

A further preferable constitution example is characterized in that the ECU is provided at a central portion in a left and right direction of the vehicle body.

According to this constitution, it is possible to detect a vehicle being inclined or turned over either in the left direction or in the right direction with high accuracy and thus to improve reliability in the detection of turnover, and the engine control unit can be protected by the vehicle body frames on both sides and thus can be prevented being damaged when the vehicle is turned over.

Another preferable example of constitution is characterized in that brackets for mounting a fuel tank are fixed to vehicle body frame members arranged on left and right sides in the center of the vehicle body, and that the ECU is arranged between these left and right brackets, and that the ECU is fixed to the respective brackets via stays.

According to this constitution, the ECU can be arranged efficiently in a space between the left and right brackets for mounting a fuel tank in the center of the vehicle body and thus the distances from the ECU to various kinds of sensors around an engine such as a water temperature sensor and an intake air temperature sensor and engine driving components such as an injector, a throttle valve, and an ignition coil can be made shorter to shorten a wire harness made of signal cables and the like to thereby simplify a layout around the engine.

As has been explained above, by constituting the turnover sensor by the acceleration sensor and integrating the turnover sensor to inside of ECU to thereby integrally unitize, promotion of turnover detection accuracy and simplification of the constitution are achieved and the turnover sensor can be laid out efficiently in a narrow space without restricting arrangement of other parts. Along therewith, by arranging the acceleration sensor in vertical arrangement, that is, arrangement by which the direction of detecting the acceleration when the vehicle body is brought into the uninclined state, is in the direction vertical to the ground, when the vehicle body is turned over by exceeding the bank angle or brought into the turndown state, the change in the detected output relative to the change in the inclination angle at a vicinity of the bank angle (65 through 70°) constituting the back angle of determining the turned over state, is large and therefore, the change in the angle within the constant A/D conversion output width is reduced and accordingly, the conversion error can be reduced, the accuracy of determining turndown can be promoted and reliability can be promoted.

Further, by using the biaxial or the triaxial acceleration sensor, necessarily constituting the direction in vertical arrangement (first detecting direction) with regard to one axis and detecting the acceleration in the second detecting direction with regard to the vehicle width direction or the front and rear direction, when the turnover angle is exceeded by detecting the angle in the first detecting direction, based on a detection result in the second detecting direction, the inclination of the vehicle body by willing running or slope running can be prevented from being determined erroneously as turnover.

Further, according to the constitution in which the acceleration in the first detecting direction is detected based on the difference from the previously set reference value in an uninclined state and the acceleration in the second detecting direction is detected based on the amount of changing the acceleration, when the inclination angle of the vehicle body is determined based on the difference from the reference value with the offset error of the detection data based on the attaching error or the like corrected with regard to the first detecting direction and it is determined whether there is the change in the inclination with regard to the second detecting direction for determining the inclination other than turnover by willing running or the like, turnover or willing running or the like can be identified and therefore, it is not necessary to calculate the difference from the reference value and therefore, it is not necessary to correct the offset error of the reference value.

Further, according to the constitution of changing the threshold in determining turnover in the first detecting direction based on the attaching angle of the acceleration sensor, when the acceleration sensor is attached to be inclined relative to the up and down direction of the vehicle body by the attaching error of ECU integrated with the acceleration sensor to the vehicle body, the detection accuracy can be promoted by changing the threshold in determining turnover in correspondence with the inclined angle.

Further, according to the constitution in which the detected average value of the acceleration sensor in the case in which the running speed is equal to or larger than the constant value and the amount of changing the detecting output of the acceleration sensor is equal to or smaller than the constant value, is held as the central value and turnover is determined with the central value as the reference value, when the running speed is equal to or larger than the constant value and the change in the output of the acceleration sensor is equal to or smaller than the constant value, the vehicle body is determined to be running in the straight attitude in which the vehicle body is hardly inclined and the average value of the sensor output in this case is held at the central value. By detecting the change from the central value, a deterioration in the detection accuracy by a dispersion in the temperature characteristic or offset by attaching error of the sensor or aging change or the like can be prevented.

Further, according to the constitution having a sensor in a vertical direction and a sensor in a horizontal direction for determining turnover based on (horizontal sensor output)÷(vertical sensor output), even when the output value of detecting turnover is varied by vibration of the vehicle body or the like, turnover can be detected highly reliably with no erroneous determination in a short period of time without using a noise removing filter or the like.

Further, according to the constitution in which the turnover sensor comprises the two dimensional acceleration sensor, the turnover sensor is contained at inside of the ECU and the ECU is attached to the vehicle body frame such that the detecting face of the turnover sensor becomes substantially orthogonal to the front and rear direction of the vehicle body, the two-dimensional (biaxial) acceleration sensor is used as the turnover sensor integrated to inside of ECU, the two-dimensional detecting face is arranged substantially orthogonally to the front and rear direction of the vehicle body, the ECU is attached to the vehicle body frame and therefore, the turnover sensor is firmly fixed to and held by the vehicle body and reliability of attachment and detection is promoted. Further, the degree of freedom of attachment can be promoted and arrangement of parts can be facilitated by attaching ECU containing the turnover sensor to the vehicle body frame with a slight inclination in the front and rear direction in correspondence with a space of arranging surrounding parts.

Further, according to the constitution of providing the ECU at the central portion in the left and right direction of the vehicle body, inclination and turnover in either of left and right directions can similarly be detected highly accurately, reliability of detecting turnover is promoted, the ECU is mechanically protected by the vehicle body frames on the two left and right sides and damage in lateral turnover is prevented.

Further, according to the constitution in which the brackets for attaching the fuel tank are fixed to the vehicle body frame members arranged on the left and on the right of the central portion of the vehicle body, the ECU is arranged between the left and right brackets and the ECU is fixed to the respective brackets via the stays, ECU can be arranged spatially efficiently between the brackets by utilizing the left and right brackets for attaching the fuel tank, distances to various sensors of a water temperature sensor, an intake temperature sensor and the like and engine drive parts of an injector, a throttle valve, an ignition coil and the like around the engine are shortened, a wire harness comprising a signal cable or the like can be shortened and layout around the engine is simplified.

Thus, from the above description, there is provided a turnover detecting apparatus of a motor cycle reducing an A/D conversion error of a turnover sensor comprising an acceleration sensor and promoting accuracy of determining turnover, wherein in a turnover detecting apparatus of a motor cycle including a turnover sensor for detecting turnover based on an inclination angle of ECU for controlling to drive an engine and a vehicle body, constituting the turnover sensor by an acceleration sensor and integrating the acceleration sensor at inside of the ECU, the acceleration sensor 1 is arranged with a detecting direction (ab) of an acceleration when the vehicle body is brought into an uninclined state ($\theta=0$) in a direction vertical to the ground to thereby constitute a first detecting direction and an acceleration in a second detecting direction along with the first detecting direction and in a direction orthogonal thereto is detected.

**Claims**

1. Two-wheeled vehicle, in particular a motorcycle or a scooter, having a vehicle body, an engine, an engine control unit (47) adapted to control the engine, and a turnover detecting means comprising an acceleration sensor provided with the engine control unit (47) being adapted to detect turnover based on an inclination angle of the engine control unit (47), wherein a first detecting direction of the acceleration sensor is arranged substantially parallel to gravity when the vehicle body is in its uninclined state, wherein a circuit board is received in the engine control unit (47), and wherein the acceleration sensor is provided on the circuit board with its detection surface in parallel to a surface of the circuit board.

2. Two-wheeled vehicle according to claim 1, wherein the acceleration sensor is further adapted to detect an acceleration in a second detecting direction in a direction orthogonal to the first detecting direction.

3. Two-wheeled vehicle according to claim 1 or 2, wherein the acceleration sensor is integrated at an inside of the engine control unit (47).

4. Two-wheeled vehicle according to at least one of the preceding claims 1 to 3, wherein the turnover detecting means is adapted to detect an acceleration in the first acceleration detecting direction based on a difference from a previously set reference value in the uninclined state and/or is adapted to detect an acceleration in the second acceleration detecting direction based on a change amount of the acceleration.

5. Two-wheeled vehicle according to at least one of the preceding claims 1 to 4, wherein the turnover detecting means is adapted to change a threshold value for determining turnover in the first detecting direction based on an angle of attaching the acceleration sensor.

6. Two-wheeled vehicle according to at least one of the preceding claims 1 to 5, wherein the turnover detecting means is adapted to maintain a detected value of the acceleration sensor as data of a central value and to determine the turnover with the central value as the reference value, in case a running speed is equal to or larger than a constant value and the amount of changing a detecting output of the acceleration sensor is equal to or smaller than a constant value.

7. Two-wheeled vehicle according to at least one of the preceding claims 1 to 6, wherein the acceleration sensor is constituted by a vertically arranged uniaxial acceleration sensor or a biaxial or triaxial acceleration sensor having a vertically arranged first detecting direction.

8. Two-wheeled vehicle according to at least one of the preceding claims 1 to 7, wherein the turnover detecting means comprises a sensor in a vertical direction and a sensor in a horizontal direction or a biaxial or a triaxial sensor having horizontally and vertically arranged detecting directions, wherein turnover is determined based on a relation between an output in the horizontal direction and an output in the vertical direction.

9. Two-wheeled vehicle according to at least one of the preceding claims 1 to 8, wherein the turnover detecting means comprises a two-dimensional acceleration sensor, wherein the turnover detecting means is contained at the inside of the engine control unit (47) and the engine control unit (47) is attached to a vehicle body frame such that a detecting face of the turnover sensor becomes substantially vertical to a front and rear direction of the vehicle body.

10. Two-wheeled vehicle according to at least one of the preceding claims 1 to 9, wherein the engine control unit (47) is provided at a central portion in a left and right direction of the vehicle body.

11. Two-wheeled vehicle according to at least one of the preceding claims 1 to 10, wherein brackets for attaching a fuel tank are fixed to vehicle body frame members arranged on a left side and on a right side of the central portion of the vehicle body, the engine control unit (47) is arranged between the left and the right brackets and the engine control unit (47) is fixed to the respective brackets via stays.

12. Two-wheeled vehicle according to at least one of the preceding claims 1 to 11, wherein the engine control unit is adapted to gradually reduce an engine output in case a turnover is detected by means of the turnover detecting means.

**Patentansprüche**

1. Zweirädriges Fahrzeug, insbesondere ein Motorrad oder ein Roller, mit einer Fahrzeugkarosserie, einem Motor, einer Motorsteuereinheit (47), vorgesehen, den Motor zu steuern, und einer Überschlagserfassungseinrichtung, aufweisend einen Beschleunigungssensor, vorgesehen mit der Motorsteuereinheit (47), die vorgesehen ist, den Überschlag auf der Grundlage eines Neigungswinkels der Motorsteuereinheit (47) zu erfassen, wobei eine erste Erfassungsrichtung des Beschleunigungssensors im Wesentlichen parallel zur Schwerkraft angeordnet ist, wenn die Fahrzeugkarosserie in ihrem nicht- geneigten Zustand ist, wobei eine Leiterplatte in der Motorsteuereinheit (47) untergebracht ist und wobei der Beschleunigungssensor auf der Leiterplatte mit seiner Erfassungsoberfläche parallel zu einer Oberfläche der Leiterplatte vorgesehen ist.

2. Zweirädriges Fahrzeug nach Anspruch 1, wobei der Beschleunigungssensor außerdem vorgesehen ist, eine Beschleunigung in einer zweiten Erfassungsrichtung, in einer Richtung rechtwinklig zu der ersten Erfassungsrichtung, zu erfassen.

3. Zweirädriges Fahrzeug nach Anspruch 1 oder 2, wobei der Beschleunigungssensor an einer Innenseite der Motorsteuereinheit (47) integriert ist.

4. Zweirädriges Fahrzeug nach zumindest einem der vorhergehenden Ansprüche 1 bis 3, wobei die Überschlagserfassungseinrichtung vorgesehen ist, eine Beschleunigung in der ersten Beschleunigungserfassungsrichtung auf der Grundlage einer Differenz zu dem vorher festgelegten Bezugswert in dem nicht- geneigten Zustand und / oder vorgesehen ist, eine Beschleunigung in die zweite Beschleunigungserfassungsrichtung auf der Grundlage einer Veränderungsgröße der Beschleunigung zu erfassen.

5. Zweirädriges Fahrzeug nach zumindest einem der vorhergehenden Ansprüche 1 bis 4, wobei die Überschlagserfassungseinrichtung vorgesehen ist, einen Grenzwert für das Bestimmen des Überschlags in der ersten Erfassungsrichtung auf der Grundlage eines Befestigungswinkels des Beschleunigungssensors zu verändern.

6. Zweirädriges Fahrzeug nach zumindest einem der vorhergehenden Ansprüche 1 bis 5, wobei die Überschlagserfassungseinrichtung vorgesehen ist, einen erfassten Wert des Beschleunigungssensors als Daten eines zentralen Wertes beizubehalten und den Überschlag mit dem zentralen Wert als den Referenzwert in dem Fall festzustellen, dass eine Fahrgeschwindigkeit gleich zu oder größer als ein konstanter Wert ist und die Veränderungsgröße eines Erfassungsausgangssignales des Beschleunigungssensors gleich zu oder kleiner als ein konstanter Wert ist.

7. Zweirädriges Fahrzeug nach zumindest einem der vorhergehenden Ansprüche 1 bis 6, wobei der Beschleunigungssensor durch einen vertikal angeordneten einachsigen Beschleunigungssensor oder einen zweiachsigen oder dreiachsigen Beschleunigungssensor mit einer vertikal angeordneten ersten Erfassungsrichtung aufgebaut ist.

8. Zweirädriges Fahrzeug nach zumindest einem der vorhergehenden Ansprüche 1 bis 7, wobei die Überschlagserfassungseinrichtung einen Sensor in einer vertikalen Richtung und einen Sensor in einer horizontalen Richtung, oder einen zweiachsigen oder einen dreiachsigen Sensor mit horizontal und vertikal angeordneten Erfassungsrichtungen aufweist, wobei der Überschlag auf der Grundlage einer Beziehung zwischen einem Ausgangssignal in der horizontalen Richtung und einem Ausgangssignal in der vertikalen Richtung festgestellt wird.

9. Zweirädriges Fahrzeug nach zumindest einem der vorhergehenden Ansprüche 1 bis 8, wobei die Überschlagserfassungseinrichtung einen zweidimensionalen Beschleunigungssensor aufweist, wobei die Überschlagserfassungseinrichtung an der Innenseite der Motorsteuereinheit (47) enthalten ist und die Motorsteuereinheit (47) mit einem Fahrzeugkarosserierahmen derart verbunden ist, dass eine Erfassungsfläche des Überschlagssensors im Wesentlichen vertikal zu einer vorderen und hinteren Richtung der Fahrzeugkarosserie wird.

10. Zweirädriges Fahrzeug nach zumindest einem der vorhergehenden Ansprüche 1 bis 9, wobei die Motorsteuereinheit (47) an einem zentralen Abschnitt in einer linken und rechten Richtung der Fahrzeugkarosserie vorgesehen ist.

11. Zweirädriges Fahrzeug nach zumindest einem der vorhergehenden Ansprüche 1 bis 10, wobei Halterungen zum Befestigen eines Kraftstofftanks an den Fahrzeugkarosserierahmenteilen auf der linken und rechten Seite des Steuerabschnittes der Fahrzeugkarosserie angeordnet sind, wobei die Motorsteuereinheit (47) zwischen den linken und rechten Halterungen angeordnet ist und die Motorsteuereinheit (47) an den jeweiligen Halterungen über Streben befestigt ist.

12. Zweirädriges Fahrzeug nach zumindest einem der vorhergehenden Ansprüche 1 bis 11, wobei die Motorsteuereinheit vorgesehen ist, allmählich eine Motorausgangsleistung in dem Fall zu reduzieren, dass ein Überschlag mittels der Überschlagserfassungseinrichtung erfasst wird.

**Revendications**

1. Véhicule à deux roues, en particulier un motocycle ou un scooter, comportant une carrosserie de véhicule, un moteur, une unité de commande de moteur (47) adaptée pour commander le moteur, et des moyens de détection de retournement comprenant un capteur d'accélération pourvus de l'unité de commande de moteur (47) adaptés pour détecter un retournement sur la base d'un angle d'inclinaison de l'unité de commande de moteur (47), dans lequel une première direction de détection du capteur d'accélération est agencée sensiblement parallèlement à la gravité lorsque la carrosserie de véhicule est dans son état non incliné, dans lequel une carte de circuit imprimé est reçue dans l'unité de commande de moteur (47), et dans lequel le capteur d'accélération est prévu sur la carte de circuit imprimé avec sa surface de détection parallèle à une surface de la carte de circuit imprimé.

2. Véhicule à deux roues selon la revendication 1, dans lequel le capteur d'accélération est en outre adapté pour détecter une accélération dans une deuxième direction de détection dans une direction orthogonale à la première direction de détection.

3. Véhicule à deux roues selon la revendication 1 ou 2, dans lequel le capteur d'accélération est intégré à l'intérieur de l'unité de commande de moteur (47).

4. Véhicule à deux roues selon au moins l'une des revendications précédentes 1 à 3, dans lequel les moyens de détection de retournement sont adaptés pour détecter une accélération dans la première direction de détection d'accélération sur la base d'une différence par rapport à une valeur de référence fixée au préalable dans l'état non incliné et/ou sont adaptés pour détecter une accélération dans la deuxième direction de détection d'accélération sur la base d'une quantité de variation de l'accélération.

5. Véhicule à deux roues selon au moins l'une des revendications précédentes 1 à 4, dans lequel les moyens de détection de retournement sont adaptés pour modifier une valeur de seuil pour déterminer un retournement dans la première direction de détection sur la base d'un angle de fixation du capteur d'accélération.

6. Véhicule à deux roues selon au moins l'une des revendications précédentes 1 à 5, dans lequel les moyens de détection de retournement sont adaptés pour maintenir une valeur détectée du capteur d'accélération en tant que données d'une valeur centrale et pour déterminer le retournement avec la valeur centrale en tant que valeur de référence, dans le cas où une vitesse de déplacement est égale ou supérieure à une valeur constante et où la quantité de variation d'une sortie de détection du capteur d'accélération est égale ou inférieure à une valeur constante.

7. Véhicule à deux roues selon au moins l'une des revendications précédentes 1 à 6, dans lequel le capteur d'accélération est constitué par un capteur d'accélération uniaxial agencé verticalement ou par un capteur d'accélération biaxial ou triaxial ayant une première direction de détection agencée verticalement.

8. Véhicule à deux roues selon au moins l'une des revendications précédentes 1 à 7, dans lequel les moyens de détection de retournement comprennent un capteur dans une direction verticale et un capteur dans une direction horizontale ou un capteur biaxial ou triaxial ayant des directions de détection agencées horizontalement et verticalement, dans lequel un retournement est déterminé sur la base d'une relation entre une sortie dans la direction horizontale et une sortie dans la direction verticale.

9. Véhicule à deux roues selon au moins l'une des revendications précédentes 1 à 8, dans lequel les moyens de détection de retournement comprennent un capteur d'accélération bidimensionnelle, dans lequel les moyens de détection de retournement sont contenus à l'intérieur de l'unité de commande de moteur (47) et l'unité de commande de moteur (47) est fixée à une carrosserie de véhicule de sorte qu'une face de détection du capteur de retournement devienne sensiblement verticale par rapport à une direction avant et arrière de la carrosserie de véhicule.

10. Véhicule à deux roues selon au moins l'une des revendications précédentes 1 à 9, dans lequel l'unité de commande de moteur (47) est prévue au niveau d'une partie centrale dans une direction vers la gauche et vers la droite de la carrosserie de véhicule.

11. Véhicule à deux roues selon au moins l'une des revendications précédentes 1 à 10, dans lequel des supports pour fixer un réservoir de carburant sont fixés aux éléments de structure de carrosserie de véhicule agencés sur un côté gauche et sur un côté droit de la partie centrale de la carrosserie de véhicule, l'unité de commande de moteur (47) est agencée entre les supports gauche et droit, et l'unité de commande de moteur (47) est fixée aux supports respectifs par des barres.

12. Véhicule à deux roues selon au moins l'une des revendications précédentes 1 à 11, dans lequel l'unité de commande de moteur est adaptée pour réduire graduellement une puissance de moteur dans le cas où un retournement est détecté par les moyens de détection de retournement.

*Fig.1(A)*

LEFT SIDE TURNOVER    NEUTRAL POSITION    RIGHT SIDE TURNOVER

OUTPUT VOLTAGE (mV)

2900
2800
2700
2600
2500
2400
2300
2200
2100

−135   −90   −45   0   45   90   135

ANGLE (°)

*Fig.1(B)*

101

a

b

θ

$1g \times Sin\ \theta$

1g

FIGURE 1

22

## Fig.2(A)

## Fig.2(B)

FIGURE 2

*Fig. 3*

START

a1

MEASURE SENSOR OUTPUT VOLTAGE (Z-AXIS)

a2

DETECT TURNOVER?
Z-AXIS OUTPUT VOLTAGE < 1gCos ± 70° (2 SECONDS OR MORE)

No

Yes    a3

STOP FUEL PUMP, STOP FUEL INJECTION, IGNITION

END

24

*Fig. 4*

```
                         ┌─────────────┐
                         │    START    │
                         └──────┬──────┘
                                │
                                ▼                              b1
              ┌──────────────────────────────────────┐
              │  MEASURE SENSOR OUTPUT VOLTAGE (Z-AXIS) │
              └──────────────────┬───────────────────┘
                                 │                            b2
                    ╱────────────────────────────╲
                   ╱        DETECT TURNOVER?        ╲      No
                  ⟨ Z-AXIS OUTPUT VOLTAGE < 1gCos±70° ⟩──────────┐
                   ╲   (2 SECONDS OR MORE)          ╱           │
                    ╲────────────┬───────────────╱             │
                                 │ Yes            b3            │
                    ╱────────────────────────────╲             │
                   ╱        DETECT TURNOVER?        ╲    No      │
                  ⟨   Y-AXIS OUTPUT VOLTAGE < 1gSin-70° OR ⟩─────┤
                   ╲ Y-AXIS OUTPUT VOLTAGE > 1gSin70°         ╱  │
                    ╲   (2 SECONDS OR MORE)              ────╱   │
                    ╲────────────┬───────────────╱             │
                                 │ Yes            b4            │
              ┌──────────────────────────────────────┐         │
              │ STOP FUEL PUMP, STOP FUEL INJECTION, IGNITION │ │
              └──────────────────┬───────────────────┘         │
                                 ▼                              │
                         ┌─────────────┐                       │
                         │     END     │                       │
                         └─────────────┘                       │
```

*Fig. 5*

102
103
104
107

2 BIAXIAL ACCELERATION SENSOR

Z-AXIS OUTPUT

FILTER

A/D CONVERTER

CPU

Y-AXIS OUTPUT

FILTER

105
106

*Fig. 6*

```
                    ┌─────────────┐
                    │    START    │
                    └──────┬──────┘
                           │         c1
                           ▼
        ┌──────────────────────────────────────────┐
        │ MEASURE SENSOR OUTPUT VOLTAGE (Z-AXIS, Y-AXIS) │
        └──────────────────┬───────────────────────┘
                           │              c2
                           ▼
        ╱──────────────────────────────────────────╲     No
       ⟨          DETECT TURNOVER?                   ⟩──────►
        ╲ Z-AXIS OUTPUT VOLTAGE < 1gCos±70° (2 SECONDS OR MORE) ╱
                           │ Yes           c3
                           ▼
        ╱──────────────────────────────────────────╲     No
       ⟨          DETECT TURNOVER?                   ⟩──────►
        ╲  Y-AXIS OUTPUT VOLTAGE CHANGE > 200mV      ╱
                           │ Yes           c4
                           ▼
        ┌──────────────────────────────────────────┐
        │ STOP FUEL PUMP, STOP FUEL INJECTION, IGNITION │
        └──────────────────┬───────────────────────┘
                           ▼
                    ┌─────────────┐
                    │     END     │
                    └─────────────┘
```

*Fig. 7*

*Fig. 8(A)*

108      110

ACCELERATION
SENSOR      111

*Fig. 8(B)*

110      109

ACCELERATION
SENSOR      111

FIGURE 8

*Fig. 9*

```
                    ┌──────────────┐
                    │    START     │
                    └──────┬───────┘
                           │                              d1
                           ▼
        ┌──────────────────────────────────────┐
        │     MEASURE SENSOR OUTPUT VOLTAGE     │
        └──────────────────┬───────────────────┘
                           │                              d2
                           ▼
      ╱────────────────────────────────────────────╲
     ╱          UPDATE CENTRAL VALUE?                ╲      No
     ╲  SPD > 30km/h AND OUTPUT VOLTAGE CHANGE < 10mV ╱────────
      ╲     CONTINUATION TIME OF 10 SECONDS OR MORE  ╱
       ╲──────────────────┬─────────────────────────╱
                          │ Yes          d3
                          ▼
        ┌──────────────────────────────────────┐
        │  UPDATE CENTRAL VALUE OF SENSOR OUTPUT VALUE │
        └──────────────────┬───────────────────┘
                           │                              d4
                           ▼
      ╱────────────────────────────────────────────╲
     ╱             DETECT TURNOVER?                  ╲      No
     ╲ DETECT INCLINATION OF 70° OR MORE (CORRECT CENTRAL VALUE)╱────────
       ╲──────────────────┬─────────────────────────╱
                          │ Yes          d5
                          ▼
        ┌──────────────────────────────────────┐
        │ STOP FUEL PUMP, STOP FUEL INJECTION, IGNITION │
        └──────────────────┬───────────────────┘
                           ▼
                    ┌──────────────┐
                    │     END      │
                    └──────────────┘
```

*Fig. 10*

```
                    ┌──────────────┐
                    │    START     │
                    └──────────────┘
                            │
                            ▼
              ┌──────────────────────────────────┐  e1
              │ MEASURE SENSOR OUTPUT VOLTAGE     │
              │ (Z-AXIS, Y-AXIS)                  │
              └──────────────────────────────────┘
                            │
                            ▼
Yes ◄─────────  DETECT TURNOVER?                     e2
              Z-AXIS OUTPUT VOLTAGE < 1gCos ±90°
              (2 SECONDS OR MORE)
                            │
                           No
                            ▼
              DETECT TURNOVER?                        e3
              Z-AXIS OUTPUT VOLTAGE < 1gCos±70°
              AND                                          ─► No
              Y-AXIS OUTPUT VOLTAGE < 1gSin-50° OR
              Y-AXIS OUTPUT VOLTAGE >1gSin50
              (2 SECONDS OR MORE)
                            │
                           Yes
                            ▼
              ┌──────────────────────────────────┐  e4
              │ STOP FUEL PUMP, STOP FUEL         │
              │ INJECTION, IGNITION               │
              └──────────────────────────────────┘
                            │
                            ▼
                    ┌──────────────┐
                    │     END      │
                    └──────────────┘
```

*Fig. 11*

START

f1

MEASURE SENSOR OUTPUT VOLTAGE (Z-AXIS, Y-AXIS)

f2

YES

DETECT TURNOVER?
Z-AXIS OUTPUT VOLTAGE < 1gCos±90° (2 SECONDS OR MORE)

NO          f3

DETECT TURNOVER?
Y-AXIS OUTPUT VOLTAGE / Z-AXIS OUTPUT VOLTAGE < 1gTan(-α)
OR
Y-AXIS OUTPUT VOLTAGE / Z-AXIS OUTPUT VOLTAGE > 1gTan α (2 SECONDS OR MORE)

NO

YES          f4

STOP FUEL PUMP, STOP FUEL INJECTION, IGNITION

END

*Fig. 12*

*Fig.13*

EP 1 304 544 B1

Fig.14

EP 1 304 544 B1

Fig.15

Fig.16

*Fig.17(A)*

*Fig.17(B)*

FIGURE 17

38

*Fig.18(A)*

LEFT ⟵        ⟶ RIGHT

*Fig.18(B)*

⟵ FRONT

FIGURE 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002071703 A

- US 5445443 A